# EUROPEAN PATENT SPECIFICATION

(11) **EP 3 216 306 B1**
(45) Date of publication and mention of the grant of the patent: **02.09.2020**
(21) Application number: 14799706.8
(22) Date of filing: 07.11.2014
(51) Int. Cl.: H04W 76/19, H04W 76/27, H04W 88/16

(54) **METHOD AND GATEWAY NODE FOR SUSPENDING AND RESUMING RAN-CN CONNECTIONS**
VERFAHREN UND GATEWAY-KNOTEN ZUM UNTERBRECHEN UND WIEDERAUFNEHMEN RAN-CN-VERBINDUNGEN
PROCÉDÉ ET NOEUD DE PASSERELLE POUR SUSPENDRE ET REPRENDRE DES CONNEXIONS RAN-CN

(43) Date of publication of application: 13.09.2017
(73) Proprietor: Telefonaktiebolaget LM Ericsson (publ), 164 83 Stockholm (SE)
(72) Inventor: OLSSON, Lars-Bertil, S-424 48 Angered (SE); RÖNNEKE, Hans, S-434 34 Kungsbacka (SE); NILSSON, Daniel, S-446 33 Älvängen (SE)
(74) Representative: Ericsson
(86) International application number: PCT/EP2014/074070
(87) International publication number: WO 2016/070936

(56) References cited:
- US-A1- 2014 242 962
- US-A1- 2014 321 371
- ERICSSON: "3GPP TSG CT4 Meeting #48; C4-100424; Suspend", 3GPP DRAFT; C4-100424-29274-910-SUSPEND, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. San Francisco, US; 20100222, 2 March 2010 (2010-03-02), XP050411065,

## Description

### TECHNICAL FIELD

Embodiments herein relate generally to a gateway node, a method in the gateway node, a mobility management node, a method in the mobility management node, a Radio Access Network (RAN) node and a method in the RAN node. More particularly the embodiments herein relate to handling a Radio Access Network-Core Network, RAN-CN, data connection between the RAN node and the gateway node and a RAN-CN signalling connection between the RAN node and the mobility management node.

### BACKGROUND

Several solutions have been presented in order to reduce of signaling loads in communications systems. For example, the Third Generation Partnership Project (3GPP) Work Item Description (WID) called Small Data and Device Triggering Enhancements (SDDTE) in the Release-12 timeframe had as a target to try to find solutions for signaling reduction for small data transmissions, especially important for Machine to Machine (M2M) communication. The work has been completed, but none of the main proposals for small data optimizations were agreed upon. Therefore the problem of potential high signaling load remains in many scenarios including M2M.

The following three main categories of optimization of the signalling load for small data were outlined in the above mentioned work:
1. Sending data over Non Access Stratum (NAS).
2. Connection less data transmission.
3. Optimized Service Request.

One problem with sending data over NAS is that the control channel will be carrying data. There is a risk that the control channel will be congested if there are large amounts of data in a cell, especially since there is no Quality of Service (QoS) mechanism on the control channel. Sending data over NAS also breaks the Evolved Packet Core (EPC) architecture split into a control plane (e.g. Mobility Management Entity (MME)) and a user plane (e.g. Serving GateWay/Packet data network GateWay (SGW/PGW)).

One problem with connection less data transmission is for example that there will be a separate transmission path for small data, it is unclear when the small data path shall be used versus the normal data path, it leads to a high impact on the system etc.

A problem with the Optimized Service Request is that it is a less efficient optimization, and has a dependence on multiple timers for release of a S1-U connection.

US 2014/0321371 A1 discloses methods, apparatuses and computer programs for use in wireless communications systems to suspend and handle the reactivation of a Radio Resource Control (RRC) connection for carrying user-plane and control plane data between a user equipment (UE) and a Radio Access Network (RAN).

### SUMMARY

The invention is defined by the subject-matter of the independent claims.

Preferred embodiments are set out in the dependent claims.

The following aspects of the disclosure are examples which are not covered by the appended claims.

An objective of examples herein is therefore to obviate at least one of the above disadvantages and to optimize signaling in a communications system.

According to a first aspect, the object is achieved by a method in a gateway node for handling a RAN-CN data connection between the gateway node and a RAN node in a communications system. The gateway node receives, from the RAN node serving a UE, a data suspend indication indicating that at least one RAN-CN data connection for the UE should be suspended. When the data suspend indication has been received, the gateway node stores resume information associated with the RAN node to enable resumption of the at least one RAN-CN data connection. The gateway node suspends the at least one RAN-CN data connection according to the received data suspend indication. The gateway node receives a data resume indication indicating that the at least one RAN-CN data connection for the UE should be resumed. The gateway node resumes, in response to the received data resume indication, the at least one RAN-CN data connection for the UE using the stored resume information.

According to a second aspect, the object is achieved by a gateway node for handling a RAN-CN data connection between the gateway node and a RAN node in a communications system. The gateway node is configured to receive, from the RAN node serving a UE, a data suspend indication indicating that at least one RAN-CN data connection for the UE should be suspended. The gateway node is configured to store, when the data suspend indication has been received, resume information associated with the RAN node to enable resumption of the at least one RAN-CN data connection. The gateway node is configured to suspend the at least one RAN-CN data connection according to the received data suspend indication. The gateway node is configured to receive a data resume indication indicating that the at least one RAN-CN data connection for the UE should be resumed. The gateway node is configured to resume, in response to the received data resume indication, the at least one RAN-CN data connection for the UE using the stored resume information.

According to a third aspect, the object is achieved by a method in a mobility management node for handling a RAN-CN signaling connection between a mobility management node and a RAN node in a communications system. The mobility management node receives, from the RAN node serving a UE, an signaling suspend indication indicating that the RAN-CN signaling connection for the UE should be suspended. The mobility management node suspends the RAN-CN signaling connection for the UE according to the received signaling suspend indication. The mobility management node receives, from the RAN node, a signaling resume indication indicating that the RAN-CA signaling connection for the UE should be resumed. The mobility management node resumes the RAN-CN signaling connection for the UE in response to the received signaling resume indication.

According to a fourth aspect, the object is achieved by a mobility management node for handling a RAN-CN signaling connection between a mobility management node and a RAN node in a communications system. The mobility management node is configured to receive, from the RAN node serving a UE, an signaling suspend indication indicating that the RAN-CN signaling connection for the UE should be suspended. The mobility management node is configured to suspend the RAN-CN signaling connection for the UE according to the received signaling suspend indication. The mobility management node is configured to receive, from the RAN node, a signaling resume indication indicating that the RAN-CA signaling connection for the UE should be resumed. The mobility management node is configured to resume the RAN-CN signaling connection for the UE in response to the received signaling resume indication.

According to a fifth aspect, the object is achieved by a method in a RAN node for handling a RAN-CN data connection between a gateway node and the RAN node and a RAN-CN signaling connection between the RAN node and a mobility management node in a communications system. The RAN node determines that at least one of the RAN-CN data connection and a RAN-CN signaling connection for the UE should be suspended. The RAN node sends, to a mobility management node handling the UE, an signaling suspend indication indicating that the RAN-CN signaling connection for the UE should be suspended. The RAN node sends, to the gateway node, a data suspend indication indicating that at least one RAN-CN data connection for the UE should be suspended.

According to a sixth aspect, the object is achieved by a RAN node for handling a RAN-CN data connection between a gateway node and the RAN node and a RAN-CN signaling connection between the RAN node and a mobility management node in a communications system. The RAN node is configured to determine that at least one of the RAN-CN data connection and a RAN-CN signaling connection for the UE should be suspended. The RAN node is configured to send, to a mobility management node handling the UE, an signaling suspend indication indicating that the RAN-CN signaling connection for the UE should be suspended. The RAN node is configured to send, to the gateway node, a data suspend indication indicating that at least one RAN-CN data connection for the UE should be suspended.

Since the User Equipment (UE), when resumption is to be performed, is served by the same RAN node as before the suspension of the RAN-CN data connection and since the gateway node has stored information about this RAN node, the resumption of the RAN-CN data connection may be performed by involving an reduced amount of signalling compared to the known technology, i.e. the signalling in the communications system is optimized.

Embodiments herein afford many advantages, of which a non-exhaustive list of examples follows:
An advantage of the embodiments herein is that it may reduce the signaling load on gateway nodes such as the SGW.

Another advantage of the embodiments herein is that they may reduce the processing requirements on the gateway node, such as e.g. the SGW.

The embodiments herein may also reduce the load on the mobility management node e.g. the MME.

Another advantage is that the reduced signaling and reduced processing in nodes may reduce the latency over the 3GPP connectivity when communication is reinitiated after some pause. That is, the responsiveness at change from ECM-IDLE to ECM-CONNECTED may be faster.

The embodiments herein are not limited to the features and advantages mentioned above. A person skilled in the art will recognize additional features and advantages upon reading the following detailed description.

### BRIEF DESCRIPTION OF THE DRAWINGS

The embodiments herein will now be further described in more detail in the following detailed description by reference to the appended drawings illustrating the embodiments and in which:
- Fig. 1: is a block diagram illustrating example embodiments of a communications system.
- Fig. 2: is a block diagram illustrating example embodiments of a communications system.
- Fig. 3a-b: are signaling diagrams illustrating example embodiments of a method.
- Fig. 4: is a signaling diagram illustrating example embodiments of suspension of the RAN-CN data connection between the RAN node and the gateway node.
- Fig. 5: is a signaling diagram illustrating example embodiments of an UE initiated resumption of the RAN-CN data connection between the RAN node and the gateway node.
- Fig. 6: is a signaling diagram illustrating example embodiments of a network initiated resumption of the RAN-CN data connection between the RAN node and the gateway node.
- Fig. 7: is a signaling diagram illustrating example embodiments of a network initiated resumption of the RAN-CN data connection between the RAN node and the gateway node.
- Fig. 8: is a signaling diagram illustrating example embodiments of a network initiated resumption of the RAN-CN data connection between the RAN node and the gateway node when the UE connects to a new RAN node.
- Fig. 9: is a signaling diagram illustrating example embodiments of a UE initiated resumption of the RAN-CN data connection between the RAN node and the gateway node when the UE connects to a new RAN node.
- Fig. 10: is a signaling diagram illustrating example embodiments of suspension of the RAN-CN data connection between the RAN node and the gateway node when a data suspend indication is lost.
- Fig. 11: is a signaling diagram illustrating example embodiments of a network initiated resumption of the RAN-CN data connection between the RAN node and the gateway node when a timer expires.
- Fig. 12: is a signaling diagram illustrating example embodiments of a network initiated resumption of the RAN-CN data connection between the RAN node and the gateway node with early uplink data.
- Fig. 13a-d: are signaling diagrams illustrating embodiments of capability signaling.

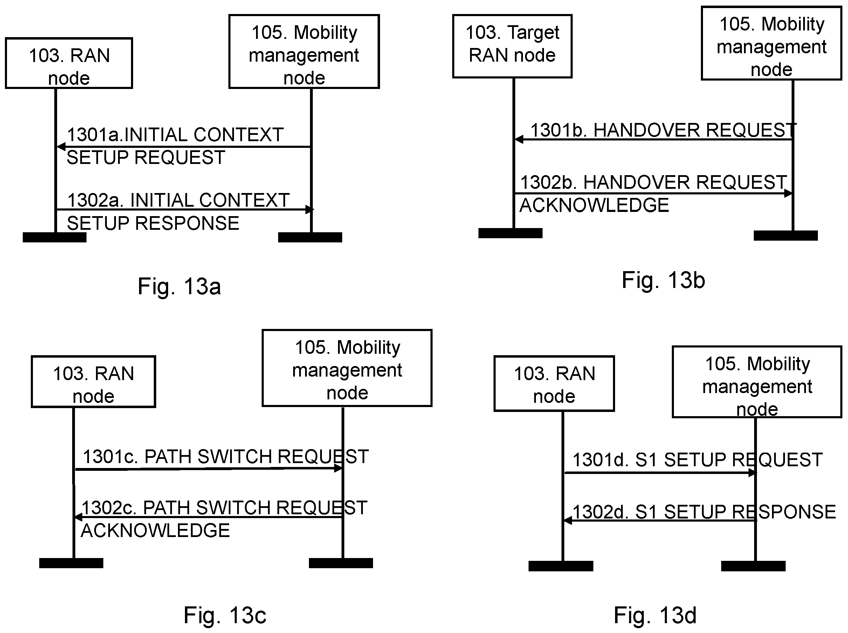

- Fig. 13: is a flow chart illustrating example embodiments of a method performed by a gateway node.

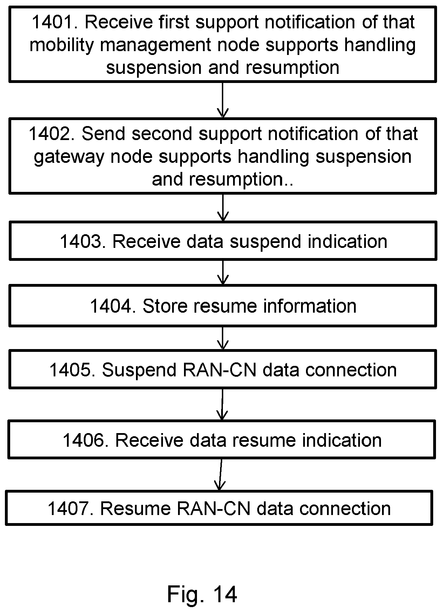

- Fig. 14: is a block diagram illustrating example embodiments of a gateway node.

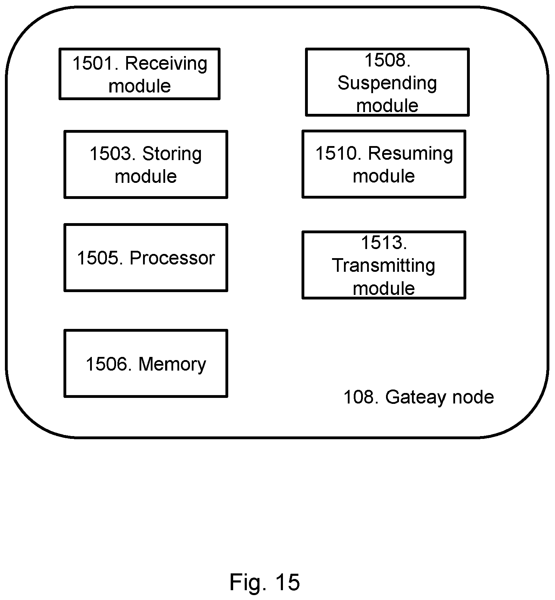

- Fig. 15: is a flow chart illustrating example embodiments of a method performed by a mobility management node.

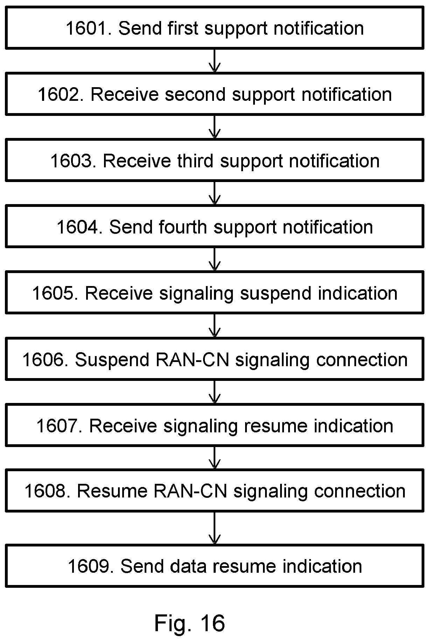

- Fig. 16: is a block diagram illustrating example embodiments of a mobility management node.

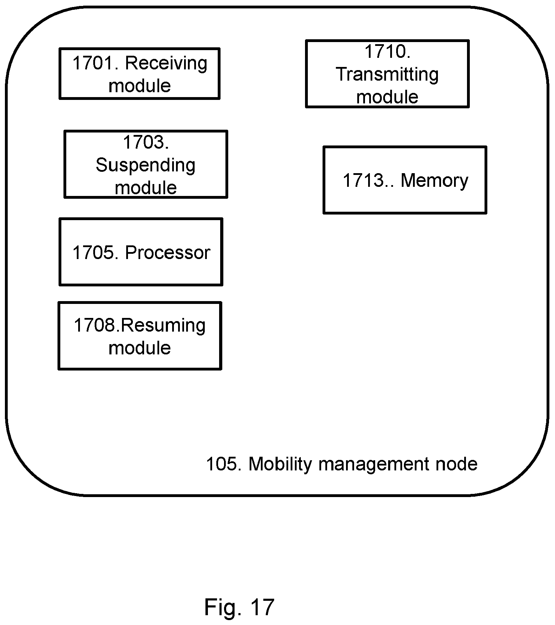

- Fig. 17: is a flow chart illustrating example embodiments of a method performed by a RAN node.

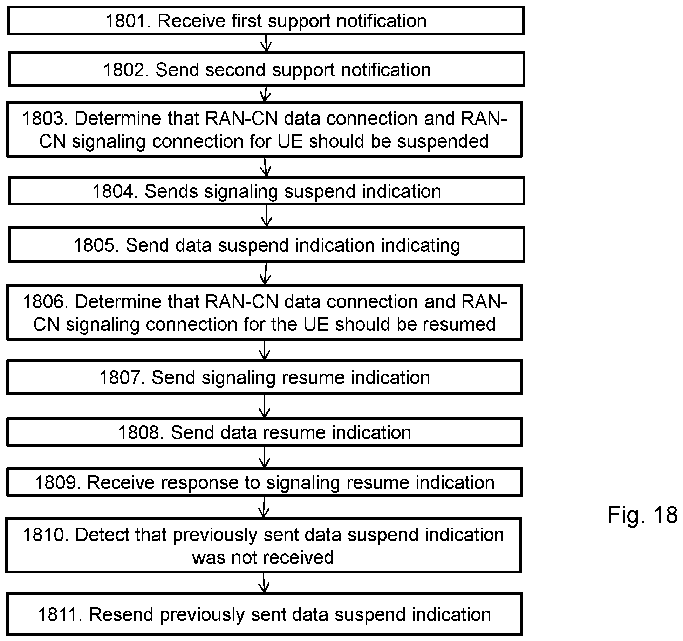

- Fig. 18: is a block diagram illustrating example embodiments of a RAN node.

The drawings are not necessarily to scale and the dimensions of certain features may have been exaggerated for the sake of clarity. Emphasis is instead placed upon illustrating the principle of the embodiments herein.

### DETAILED DESCRIPTION

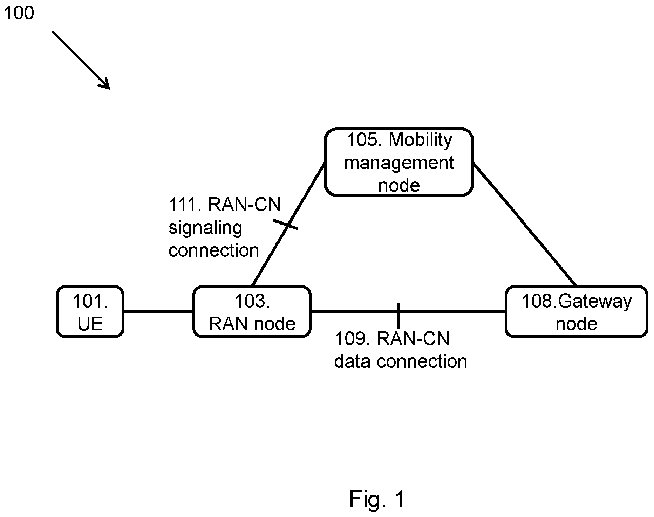

**Figure 1** depicts a **communications system 100** in which embodiments herein may be implemented. The communications network 100 may in some embodiments apply to one or more radio access technologies such as for example Long Term Evolution (LTE), LTE Advanced, Wideband Code Division Multiple Access (WCDMA), Global System for Mobile Communications (GSM), or any other 3GPP radio access technology, M2M Low data rate radio technologies using EPC or other radio access technologies such as a Wireless Local Area Network (WLAN). The communications system 100 may also be referred to as e.g. a wireless communications network, a wireless communications system, a communications network, a network or a system.

In the communications system 100, a **UE 101** is capable of communicating via a RAN with one or more CNs.

The RAN comprises at least one **RAN node 103** which communicates with and serves UEs 101 within range of the RAN node 103. The RAN node 103 may cover one or more cells. A cell may be described as a geographical area. A RAN node 103 may be described as a base station, a Radio Base Station (RBS), an evolved Node B (eNB, eNodeB), Base Transceiver Station (BTS), Radio Network Controller (RNC) etc. depending on the technology and terminology used.

The UE 101 may be a device by which a subscriber may access services offered by an operator's network and services outside operator's network to which the operator's radio access network and core network provide access, e.g. access to the Internet. The UE 101 may be any device, mobile or stationary, enabled to communicate in the communications network, for instance but not limited to e.g. user equipment, mobile phone, smart phone, sensors, meters, vehicles, household appliances, medical appliances, media players, cameras, M2M device, Device to Device (D2D) device, Internet of Things (loT) device or any type of consumer electronic, for instance but not limited to television, radio, lighting arrangements, tablet computer, laptop or Personal Computer (PC). The UE 101 may be portable, pocket storable, hand held, computer comprised, or vehicle mounted devices, enabled to communicate voice and/or data, via the radio access network, with another entity, such as another device or a server.

It should be noted that the connections between the entities in the communications system may be of any suitable kind including either a wired or wireless link. The connections may use any suitable protocol depending on type and level of layer (e.g. as indicated by the Open Systems Interconnection (OSI) model) as understood by the person skilled in the art.

The communications system 100 further comprises a **mobility management node 105** such as e.g. a MME, a Serving General packet radio service Support Node (SGSN) or a combined MME and SGSN node. The mobility management node 105 may manage session states, authentication, paging, mobility with 3GPP, Second Generation (2G) and Third Generation (3G) nodes, roaming, and other bearer management functions.

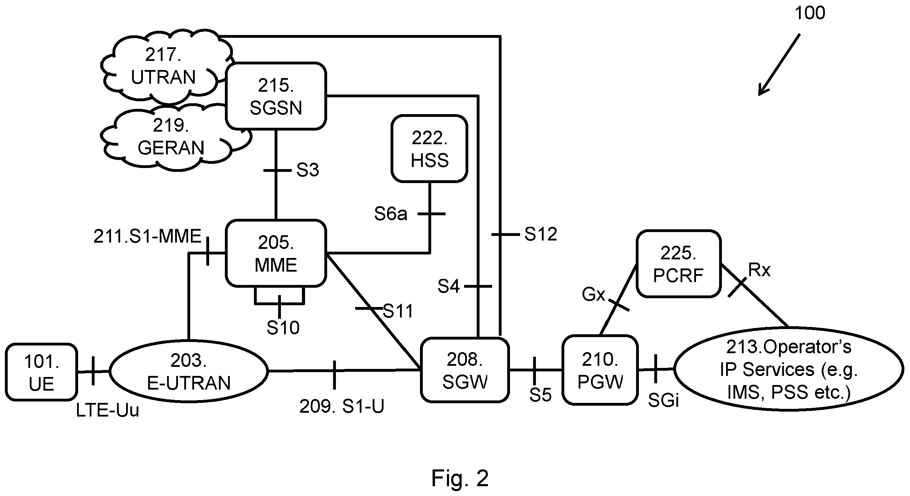

The communications system 100 comprises a **gateway node 108.** The gateway node 108 may be a SGW, a PGW, a combined SGW and PGW (SGW/PGW) or any other suitable gateway node. These gateways will be described in more detail with reference to figure 2 below.

There is at least one **RAN-CN data connection 109** between the RAN node 103 and the gateway node 108, and there is at least one **RAN-CN signaling connection 111** between the RAN node 103 and the mobility management node 105. Each PDN connection has its own RAN-CN data connection 109, so there may be one or more RAN-CN data connections 109 between the RAN node 103 and the gateway node 108. The RAN-CN data connection 109 carries the network's user traffic may also be referred to as a user plane connection or a bearer plane connection or a S1-U connection or an S1-U interface or any other suitable term. The RAN-CN signaling connection 111 carriers control information (also known as signaling) and may also be referred to as a RAN-CN control plane connection or a control plane connection or a S1-MME connection or an S-MME interface or any other suitable term. The term "RAN-CN" indicates that it is a connection between the RAN, e.g. represented by the RAN node 103, and the CN, e.g. represented by the mobility management node 105 or the gateway node 108 or both or any other suitable CN node.

**Figure 2** depicts an architecture model of an example embodiment of the communications system 100 in which embodiments herein may be implemented. The communications network 100 may in some embodiments apply to one or more radio access technologies such as for example LTE, LTE Advanced, WCDMA, GSM, or any other 3GPP radio access technology, M2M Low data rate radio technologies using EPC or other radio access technologies such as e.g. WLAN.

The communications system 100 comprises a RAN exemplified by **E-UTRAN 203,** where E-UTRAN is short for Evolved-Universal Terrestrial Radio Access Network. The E-UTRAN 203 comprises elements such as a RAN node 103 (not shown in figure 2). As mentioned above, the RAN node may be for example a base station, a NodeB, eNode B, eNB, RNC or any other element capable to communicate with the UE 101. The reference point between the UE 101 and the E-UTRAN 203 may be referred to as LTE-Uu.

A **MME 205** may be connected to the E-UTRAN 203 via the reference point **S1-MME 211.** S1-MME is an example of the RAN-CN signalling connection 111 in figure 1. The MME 205 is an element in the communications system 100 having functions such as e.g. NAS signalling, Inter CN node signalling for mobility between 3GPP access networks, UE reachability, Tracking Area (TA) list management, PGW and SGW selection, MME selection for handover with MME change etc. S10 is the reference point between MMEs 205 for MME relocation and MME to MME information transfer. In some embodiments, the mobility management node 105 in figure 1 is represented by the MME 205 in figure 2.

The communications system 100 comprises at least two gateways, e.g. the **SGW 208** and the **PGW 210.** The SGW 208 and the PGW 210 may be implemented in one physical node or in separate physical nodes. The SGW 208 is the gateway which terminates the interface towards E-UTRAN 203. The reference point between the SGW 208 and the E-UTRAN 210 for the per bearer user plane tunneling and inter eNodeB path switching during handover may be referred to as **S1-U 209.** S1-U is an example of the RAN-CN data connection 109 in figure 1. The SGW 208 routes and forwards user data packets, while also acting as the mobility anchor for the user plane during inter-eNodeB handovers and as the anchor for mobility between LTE and other 3GPP technologies (relaying the traffic between 2G/3G systems and the PGW 210) etc. S11 is the reference point between the SGW 208 and the MME 205. In some embodiments, the gateway node 108 in figure 1 is represented by the SGW 208 in figure 2.

The PGW 210 is the gateway which terminates the SGi interface towards the Packet Data Network (PDN). The PDN is illustrated in figure 2 by the **Operator's IP Services (e.g. IMS, PSS etc.) 213.** IP is short for Internet Protocol, IMS is short for IP Multimedia Subsystem or IM Multimedia core network Subsystem and PSS is short for Packet Switched Streaming. If the UE 105 is accessing multiple PDNs, there may be more than one PGW 210 for that UE 101. Functions of the PGW 210 are e.g. providing connectivity from the UE 101 to external PDNs by being the point of exit and entry of traffic for the UE 101, performing policy enforcement, packet filtering for each user, charging support, lawful interception and packet screening etc. S5 is the reference point which provides user plane tunnelling and tunnel management between the SGW 208 and the PGW 210.

The communications system 100 exemplified in figure 2 further comprises a **SGSN 215** is responsible for the delivery of data packets from and to the UE's 101 within its geographical service area. One of the SGSN's 215 functions is to provide signaling for mobility between 2G/3G and E-UTRAN 3GPP access networks. 2G/3G access network are exemplified with **GERAN 217** and **UTRAN 219** in figure 2, where GERAN 217 is short for GSM EDGE Radio Access Network, EDGE is short for Enhanced Data rates for Global Evolution and UTRAN 219 is short for Universal Terrestrial Radio Access Network. Some further functions of the SGSN 215 are to handle packet routing and transfer, mobility management (attach/detach and location management), logical link management, and authentication and charging functions etc. S3 is the interface between the SGSN 215 and the MME 205. S4 is a reference point between the SGSN 215 and the SGW 208. S12 is the reference point between the SGW 208 and the UTRAN 217.

The Home Subscriber Server **(HSS) 222** is a subscriber server node similar to the GSM Home Location Register (HLR) and Authentication Centre (AuC). The HSS 222 comprises subscription-related information (subscriber profiles), performs authentication and authorization of the user, and may provide information about the subscriber's location and IP information. The reference point S6a enables transfer of subscription and authentication data for authenticating/authorizing user access to the evolved system (Authentication, Authorization, and Accounting (AAA) interface) between the MME 205 and the HSS 22.

The Policy and Charging Rules Function **(PCRF) 225** is a policy and charging control element. The PCRF 225 encompasses policy control decision and flow based charging control functionalities, it provides network control regarding the service 225 flow detection, gating, Quality of Service (QoS) and flow based charging etc. The PCRF 130 may be described as a functional entity which may be a standalone node or a function implemented in another node. The reference point Gx provides transfer of (QoS) policy and charging rules from the PCRF 225 to a Policy and Charging Enforcement Function (PCEF) e.g. comprised in the PGW 210. Rx is the reference point which resides between the PCRF 225 and the Operator's IP Services 213. The RX reference point is used to exchange application level session information between the PCRF 225 and the Application Function (AF).

It should be noted that the communication links in the communications system 100 exemplified in figure 2 may be of any suitable kind including either a wired or wireless link. The link may use any suitable protocol depending on type and level of layer (e.g. as indicated by the OSI model as understood by the person skilled in the art.

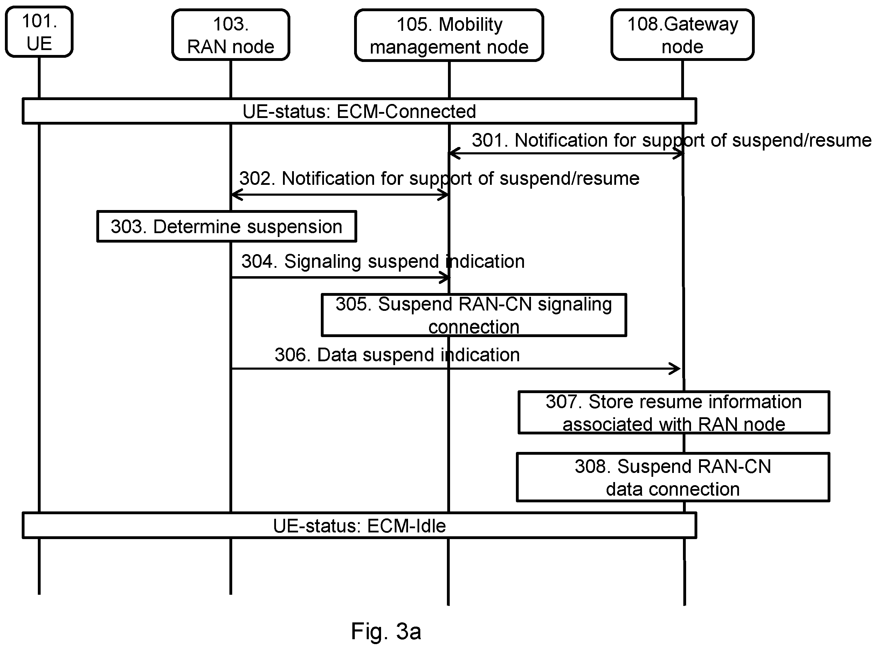

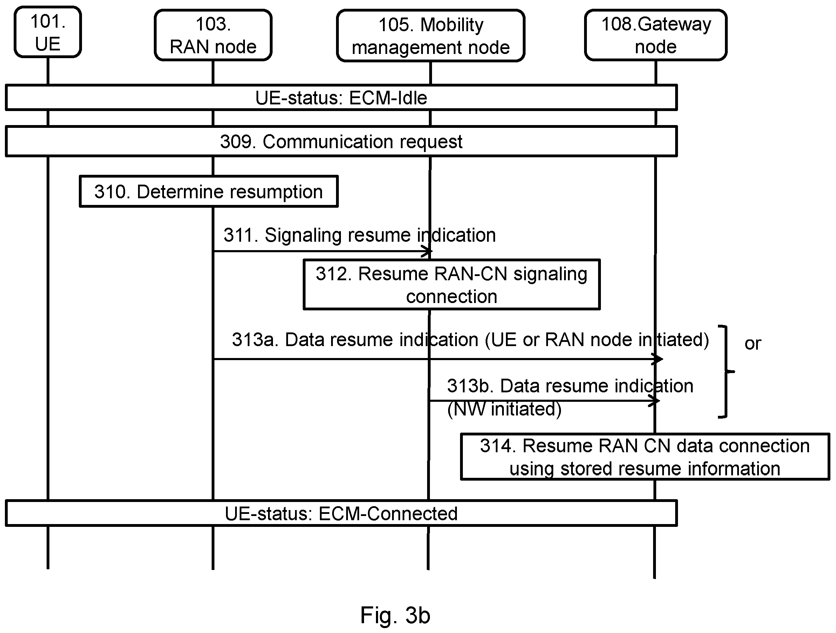

The method for handling a RAN-CN data connection 109 between the gateway node 108 and the RAN node 103 for the UE 101 and a RAN-CN signaling connection 111 between the RAN node 103 and the mobility management node 105 for the UE 101 in the communications system 100, according to some embodiments will now be described with reference to the signaling diagram depicted in **Figures 3a** **and** **3b****.** Figure 3a comprises steps 301-308 and figure 3b comprises steps 309-314. Figure 3b is a continuation of figure 3a.

The handling of the connections 109, 111 may comprise at least one of suspending and resuming the respective connections 109, 111. When a connection 109, 111 is suspended, it may be seen as being paused, interrupted, postponed, put on hold or deferred. A connection 109, 11 is not removed when it is suspended. When a suspended connection 109, 111 is resumed, it may be seen as being recommenced, continued or restarted. Using the S1-U connection 209 as an example of the RAN-CN data connection 109. In such example embodiment, the resumption and suspension may be referred to as S1-U suspension/resumption. When the S-U connection 209 is suspended, the GTP-U association (e.g. the IP address and the F-TEIDs) remains valid. When the S1-U connection 209 is suspended, the SGW 208 may not use the S1-U connection 209 to convey e.g. downlink GTP-U PDUs with downlink data to the eNB 203. However, even though the S1-U connection 209 is suspended, the SGW 208 may still use the GTP-U association to convey other information, e.g. to enable inband control signaling.

At start of the method, e.g. before step 301 takes place, a Radio Resource Control (RRC) connection is established and service request messages are transmitted. When an RRC connection is established the UE 101 enters RRC Connected mode which is a requirement for the UE 101 in order to be able to transfer any application data. A service request message may be a request from the UE 101 to transmit data.

Furthermore, the state of the UE 101 is ECM-Connected at start of the method in figure 3. ECM is short for Evolved Packet System (EPS) Connection Management. An ECM state describes the signaling connectivity between the UE 101 and the core network, and there are two ECM states: ECM-Idle and ECM-Connected. The UE 101 and the mobility management node 105 enter the ECM-Connected state when the signaling connection is established between the UE 101 and the mobility management node 105. Such signaling connection is made up of two parts: an RRC connection between the UE 101 and the RAN node 103, and the RAN-CN signaling connection 111 between the RAN node 103 and the mobility management node 105. The UE 101 enters the ECM-Idle state when its signaling connection to the mobility management node 105 has been released or broken. This release or failure may be indicated by the RAN node 103 to the UE 101 or detected by the UE 101 itself. In other words, when the UE is in ECM-Idle state, there is no NAS signaling connection between UE 101 and network. The ECM state of the UE 101 is based on information held by the mobility management node 105.

The method comprises the following steps, which steps may as well be carried out in another suitable order than described below.

### Step 301

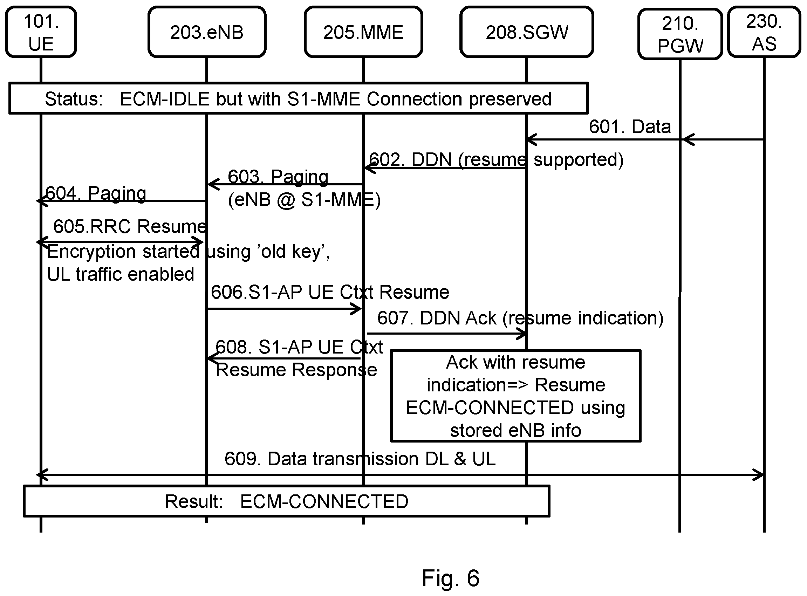

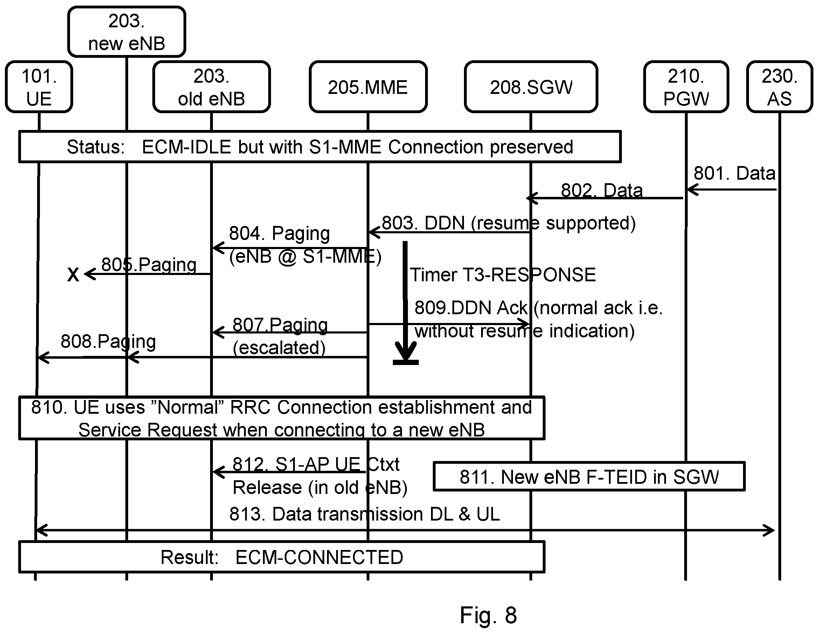

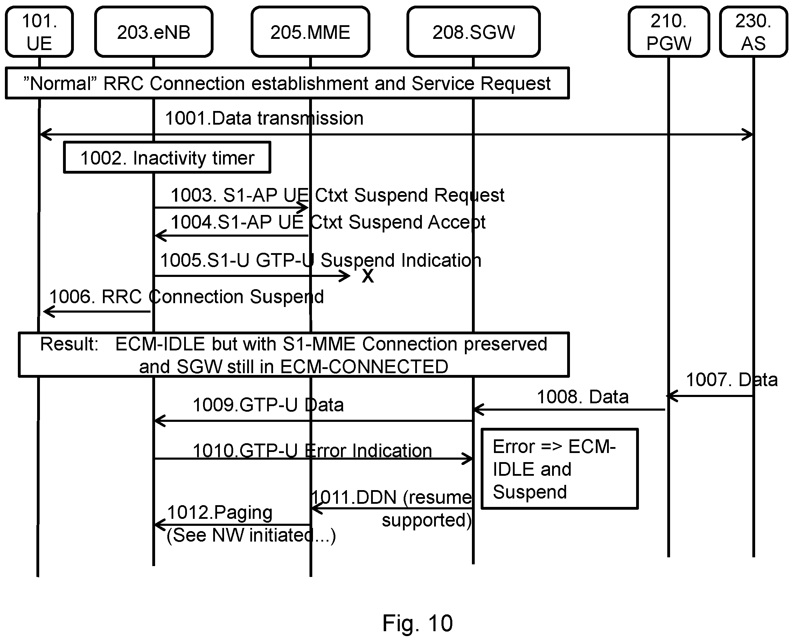

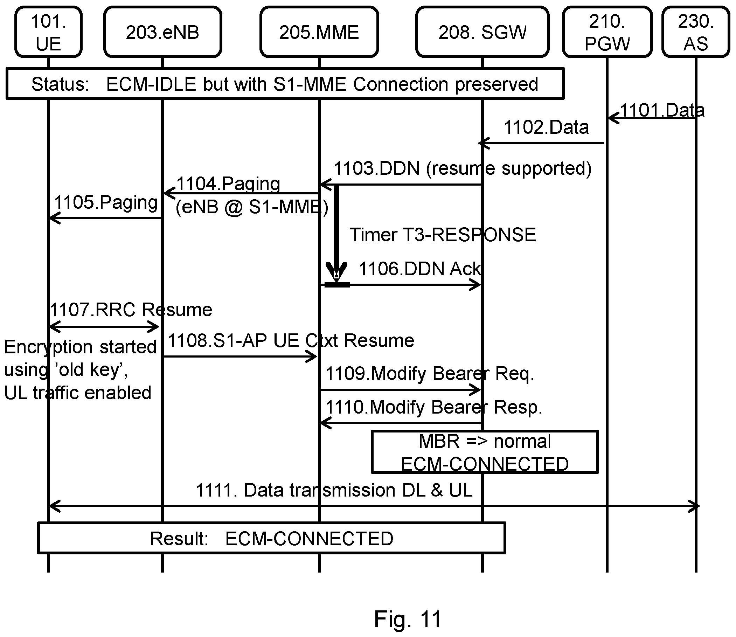

This step is seen in figure 3a. This step corresponds to step 602 in figure 6, step 803 in figure 8, step 1011 in figure 10, step 1103 in figure 11. The gateway node 108 and the mobility management node 105 agrees on that they shall use at least one of the suspension and resumption functions. Therefore, each node's 105, 108 capabilities regarding the support for the handling of at least one of the suspension and resumption are signaled to the other node. For example, the gateway node 108 sends a first notification to the mobility management node 105 which notifies that the gateway node 108 has capability to handle at least one of suspension and resumption. Similarly, the mobility management node 105 sends a second notification to the gateway node 108 which notifies that the mobility management node 105 has capability to handle at least one of suspension and resumption.

Step 301 may be triggered by any procedure that involves communication between the mobility management node 105 and the gateway node 108, for example Create session request and response messages.

### Step 302

This step is seen in figure 3a. The mobility management node 105 and the RAN node 103 agrees on that they shall use at least one of the suspension and /resumption function. Therefore, each node's 103, 105 capabilities regarding the support for the handling of at least one of the suspension and resumption are signaled to the other node. For example, the RAN node 103 sends a third notification to the mobility management node 105 which notifies that the RAN node 103 has capability to handle at least one of suspension and resumption. Similarly, the mobility management node 105 sends a fourth notification to the RAN node 103 which notifies that the mobility management node 105 has capability to handle at least one of suspension and resumption.

Step 302 may be triggered by any procedure that involves communication between the mobility management node 105 and the RAN node 103, e.g. S1-AP communication such as initial establishment of the node level RAN-CN signaling connection 111. Another trigger for step 302 may be an UE initial message if signaling is done on a per UE basis.

Steps 301 and 302 may be performed before or after the UE 101 is in connected state. Steps 301 and 302 may be performed e.g. the first time a session is setup or when the nodes communicate for the first time.

Steps 301 and 302 may be seen as synchronizing the handling of the RAN-CN data connection 109 and the RAN-CN signaling connection 111 between at least some of the nodes in the communications system 100, e.g. at least some of the RAN node 103, the gateway node 108 and the mobility management node 105.

The capability signaling in steps 301 and 302 will be described in more detail later.

### Step 303

This step is seen in figure 3a. The RAN node 103 determines that the RAN-CN data connection 109 for UE 101 between mobility management node 105 and the gateway node 108 should be suspended and that the RAN-CN signaling connection 111 between the RAN node 103 and the mobility management node 105 for the UE 101 should be suspended. When the RAN-CN data connection 109 and the RAN-CN signaling connection 11 are suspended, there is no signaling between the UE 101 and the mobility management entity 105.

The RAN node 103 determines that at least one of the radio bearers and the RAN-CN data connection 109 and the RAN-CN signaling connection 111 should be suspended because e.g. an inactivity timer has expired, because it has not received any Acknowledgement (Ack) message from the UE 101 etc.

### Step 304

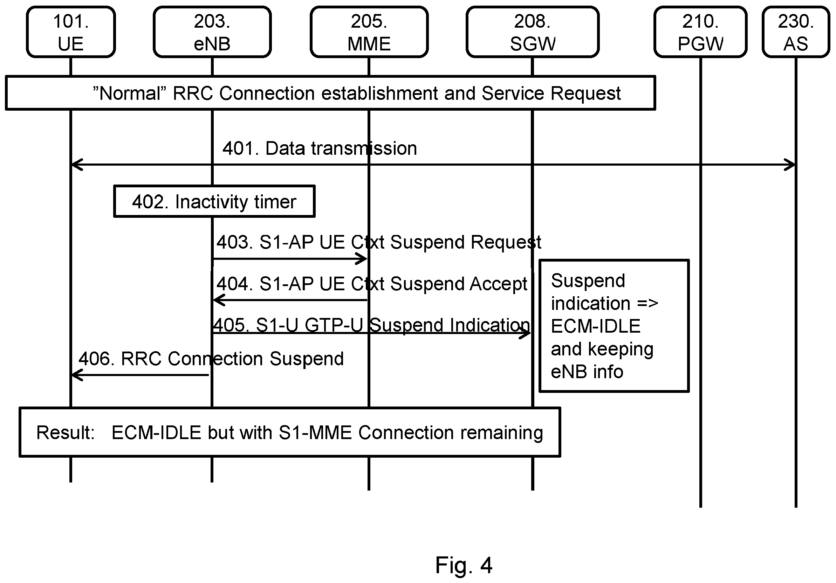

This step is seen in figure 3a. This step corresponds to step 403 in figure 4 and step 1003 in figure 10. The RAN node 103 sends a signaling suspend indication to the mobility management node 105. The signaling suspend indication indicates that the RAN-CN signaling connection 111 should be suspended, e.g. that signaling including data transport for the UE 101 is inhibited at the connection. The signaling suspend indication may be in the form of a flag, an Information Element (IE), a cause code, or any other suitable type of information format indicating that the RAN-CN signaling connection 111 should be suspended.

### Step 305

This step is seen in figure 3a. The mobility management node 108 suspends the RAN-CN signaling connection 111 as indicated by the received signaling suspend indication. This may involve changing the status of the UE from connected to idle.

### Step 306

This step is seen in figure 3a. This step corresponds to step 403 in figure 4, step 1005 and step 1010 in figure 10. The RAN node 103 sends, to the gateway node 108, a data suspend indication indicating that the RAN-CN data connection 109 between the RAN node 103 and the gateway node 108 should be suspended for the UE 101.

In some embodiments, the data suspend indication is an explicit indication for example in the form of an Information Element (IE) or a Cause Code (CC) which is dedicated for the indication. The data suspend indication may be sent separately or it may be sent in an existing message (e.g. piggybacked on an existing message). In other embodiments, the data suspend indication is an implicit indication.

The data suspend indication may be a direct or an indirect indication and it may be in the form of a flag, an Information Element (IE), a cause code, a GTP-U uplink data PDU with a specific packet indicating S1-U suspension, or a GTP-U tunnel management message indicating S1-U suspension or any other suitable type of information format indicating that the RAN-CN data connection 109 should be suspended.

### Step 307

This step is seen in figure 3a. When the gateway node 108 has received the data suspend indication in step 306, the gateway node 108 stores information associated with the RAN node 103 which currently serves the UE 101, e.g. the RAN node 103 which sent the data suspend indication in step 306. The stored information enables resumption of the connection at a later stage. Thus, the stored information may be referred to as resume information. Such resume information may be e.g. a Fully qualified-Tunnel Endpoint IDentifier (F-TEID) indicating the endpoint of an GPRS Tunneling Protocol (GTP) tunnel associated with the RAN node 103, Tunnel Endpoint Identifier (TEID), an IP address, an User Datagram Protocol (UDP) port number, security information etc. GPRS is short for General Packet Radio Service. The gateway node 108 may store this resume information in an internal memory or in an external memory to which it has access.

The GTP mentioned above is communication protocols which may be decomposed into a GTP-Control plane (GTP-C), a GTP-User plane (GTP-U) and a GTP' protocol.

### Step 308

This step is seen in figure 3a. When the gateway node 108 has stored the resume information in step 307, the gateway node 108 suspends the RAN-CN data connection 109 between the RAN node 103 and the gateway node 108 for the UE 101 and according to the received data suspend indication in step 306. When the RAN-CN data connection 109 has been suspended, no signaling can be sent between the UE 101 and the network.

When the RAN-CN data connection 109 has been suspended the ECM state of the UE 101 is set to ECM-Idle. At least one of the UE 101, the RAN node 103, the mobility management node 105 and the gateway node 108 may have information indicating that the UE 101 is in ECM-Idle state.

When the RAN-CN data connection 109 has been suspended, the gateway node 108 may not convey downlink data to the RAN node 103. However, the gateway node 108 may still be allowed to convey other types of information to the RAN node 103, e.g. to enable inband control signaling.

The suspending of the RAN-CN data connection 109 may be independent of any possible RRC resume over the radio interface.

### Step 309

This step is seen in figure 3b. A communication request is sent either from the UE 101 or from the network and is a request for sending data to or from the UE 101. The communication request may be initiated by the UE 101 (by the UE 101 sending e.g. a Service Request message or a Resume request message) or initiated by the network (e.g. DDN, paging, Service request, Resume Request etc.)

### Step 310

This step is seen in figure 3b. The RAN node 103 determines that the RAN-CN data connection 109 for the UE 101 and the RAN-CN signaling connection 111 for the UE 101 should be resumed. The reason for the resumption may be the communication request in step 309.

### Step 311

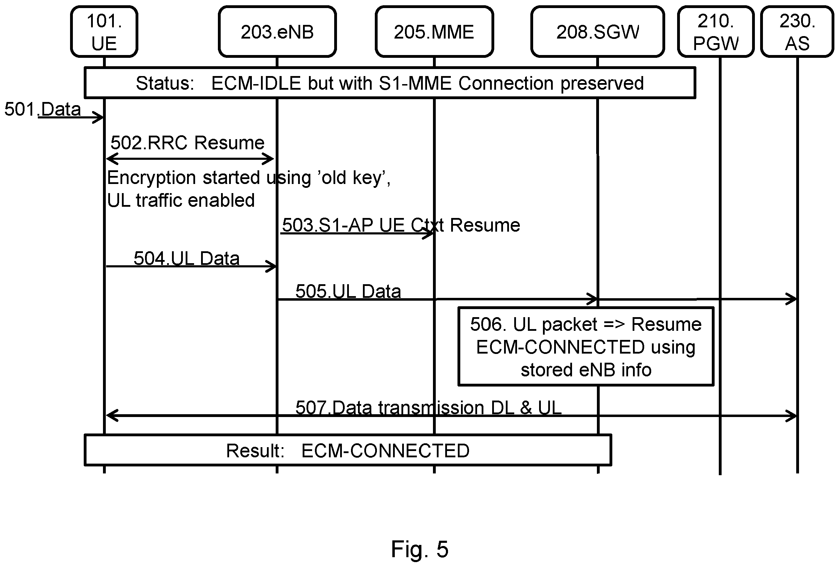

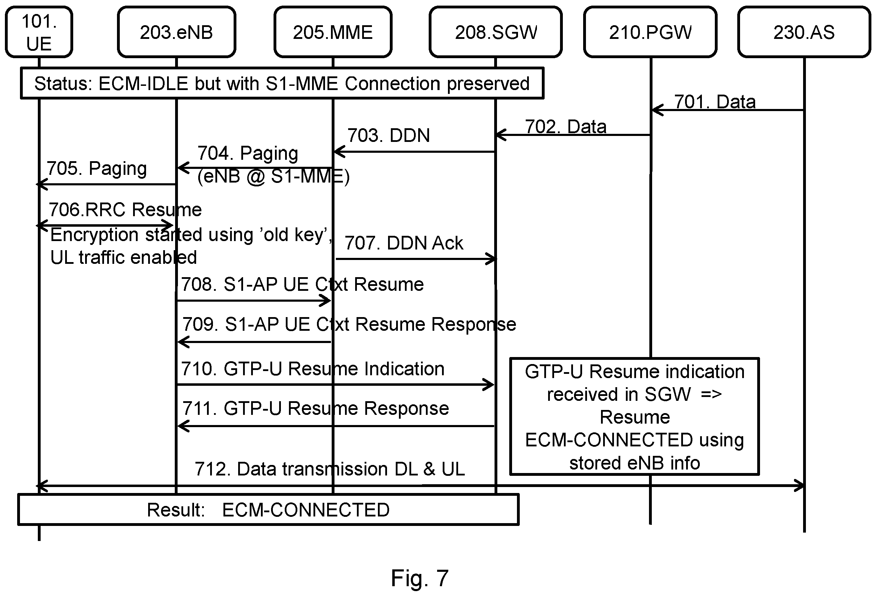

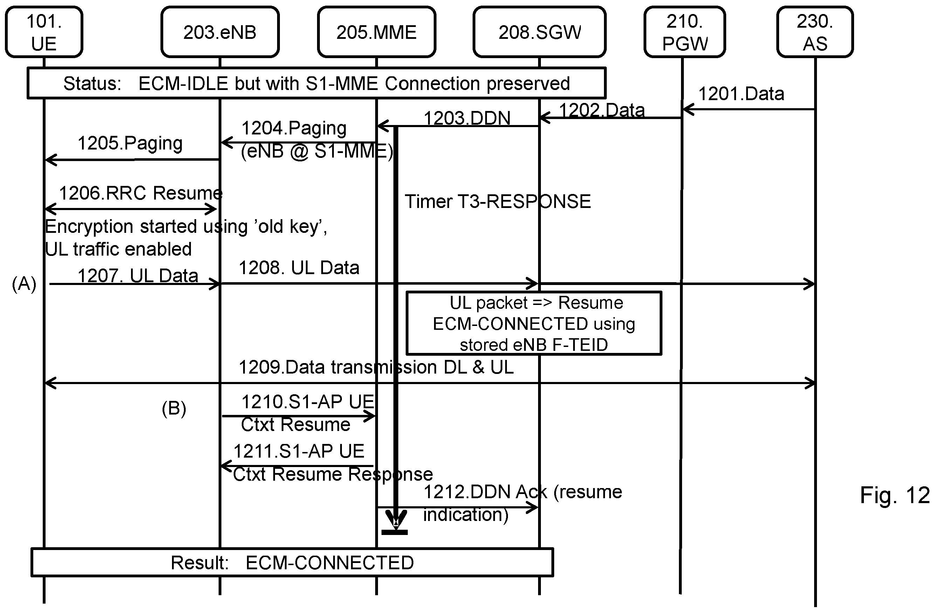

This step is seen in figure 3b. This step corresponds to step 503 in figure 5, step 606 in figure 6, step 708 in figure 7, step 1108 in figure 11 and step 1210 in figure 12. The RAN node 103 sends a signaling resume indication to the mobility management node 105. The signaling resume indication indicates that the RAN-CN signaling connection 111 should be resumed.

The signaling resume indication may be in the form of a flag, an Information Element (IE), a cause code, or any other suitable type of information format indicating that the RAN-CN signaling connection 111 should be resumed.

### Step 312

This step is seen in figure 3b. Upon receipt of the signaling resume indication in step 311, the mobility management node 105 resumes the RAN-CN signaling connection 111. The RAN-CN signaling connection 111 is resumed as before it was suspended.

### Step 313a

This step is seen in figure 3b. This step corresponds to step 505 in figure 5, step 710 in figure 7 and step 1208 in figure 12. This step is an alternative to step 313b, i.e. it is performed instead of step 313b. In some embodiments, the RAN node 103 sends, to the gateway node 108, a data resume indication indicating that the RAN-CN data connection 109 for the UE 101 between the RAN node 103 and the gateway node 108 should be resumed. The reason for the resumption of the RAN-CN data connection 109 is the communication request in step 309 or any notification from the RAN node 103 or in response to a DDN message sent by the gateway node 108. The data resume indication may be initiated by the UE 101 (and sent to the RAN node 103) or initiated by the RAN node 103.

The data resume indication may be in the form of a flag, an Information Element (IE), and IE comprising the indication, a cause code, comprised in a DDN Acknowledgement message, or a GTP-U uplink data PDU with a specific packet indicating data resume, or a GTP-U tunnel management message indicating data resume or any other suitable type of information format indicating that the RAN-CN data connection 109 should be resumed.

### Step 313b

This step is seen in figure 3b. This step corresponds to step 607 in figure 6 and step 1212 in figure 12. This step is an alternative to step 313a, i.e. it is performed instead of step 313a. In some embodiments, the mobility management node 105 sends, to the gateway node 108, a data resume indication indicating that the RAN-CN data connection 109 for the UE 101 between RAN node 103 and the gateway node 108 should be resumed. The reason for the resumption of the connection is the communication request in step 305 or any notification from the RAN node 103 or in response to a DDN message sent by the gateway node 108.

The data resume indication may therefore be either sent by the RAN node 103 (Step 313a) or by the mobility management node 105 (Step 313b).

### Step 314

This step is seen in figure 3b. Upon receipt of the data resume indication in either step 313a or 313b, the gateway node 108 resumes the RAN-CN data connection 109 for the UE 101 between the RAN node 103 and the gateway node 108. The resumption of the RAN-CN data connection 109 is done using the stored resume information about the RAN node 103 which served the UE 101 before the connection was suspended in step 308. The resume information about the RAN node 103 which served the UE 101 before the connection was suspended may be used because the UE 101 is still served by the same RAN node 103 as before the suspension. The UE 101 may have moved to another cell compared to the cell in which it was located when the RAN-CN data connection 109 was suspended, but this other cell is also served by the same RAN node 103. In other words, there is no change of which RAN node 103 that is serving the UE 101 in the method illustrated in figure 3.

The RAN-CN data connection 109 is resumed as before it was suspended.

When the RAN-CN signaling connection 111 and the RAN-CN data connection 109 for the UE 101 have been resumed, the status of the UE 101 is set to ECM-Connected. At least one of the UE 101, the RAN node 103, the mobility management node 105 and the gateway node 108 may have information indicating that the UE 101 is in ECM-connected state.

When the RAN-CN signaling connection 111 and the RAN-CN data connection 109 for the UE 101 are resumed and the UE 101 is in ECM-Connected state, the requested communication (e.g. data) can be transmitted to or from the UE 101.

A number of example embodiments of the method will now be described with reference to **figures 4-12****.** In figures 4-11, the RAN node 103 is exemplified by an eNB 203, the mobility management node 105 is exemplified by an MME 205 and the gateway node 108 is exemplified by an SGW 208, the RAN-CN data connection 109 is exemplified by an S1-U connection 209 and the RAN-CN signaling connection 111 is exemplified by an S1-MME connection 211. In addition, figures 4-11 illustrates a **PGW 210** and an Application Server (AS) 230. The AS 230 is a server comprising at least one application and executes and host services.

**Figure 4** is a signaling diagram illustrating an example embodiment of suspending the RAN-CN data connection 109 between the RAN node 103 and the gateway node 108, e.g. the eNB 203 and the SGW 208. The initial status of this example embodiment is that at least one of the nodes, e.g. at least one of the UE 101, the eNB 203, the MME 205 and the SGW 208, all are in state ECM-CONNECTED. A "Normal" RRC Connection establishment and Service Request are performed at before step 401 of the method is executed. The method in figure 4 comprises the following steps, which steps may be performed in any suitable order than described below.

### Step 401

The UE 101 sends data to the AS 203 or receives data from the AS 230 or both.

### Step 402

The UE 101 becomes inactive and an inactivity timer which is supervised by the eNB 203 times out.

### Step 403

This step corresponds to step 304 in figure 3a and step 1003 in figure 10. The timeout triggers eNB 203 to send a S1-AP UE Context Suspend Request message to the MME 205 to indicate that the UE 101 is no longer directly reachable with signaling and also that the eNB 203 keeps UE user plane resources allocated. The Context Suspend Request message may be the signaling suspend indication or the Context Suspend Request message may comprise the signaling suspend indication.

### Step 404

The MME 205 replies to eNB 203 with a S1-AP UE Context Suspend Accept message to inform the eNB 203 about that MME 205 has received and accepted the information provided by UE Context Suspend Request message in step 403.

### Step 405

This step corresponds to step 306 in figure 3a and step 1005 and step 1010 in figure 10. The eNB 203 sends a Data Suspend Indication to the SGW 208 to inform the SGW 208 about that the UE 101 can no longer be reached by downlink user data. The SGW 208 stops downlink data transport, changes the UE state to ECM-IDLE but keeps the downlink F-TEIDs allocated.

### Step 406

The eNB 203 sends a RRC Connection Suspend message to the UE 101.

The resulting effect of the example embodiment in figure 4 to MME 205 is that MME 205 is aware of that the UE 101 is no longer reachable and that eNB 203 is able to at a later resume of uplink data transport use saved uplink data F-TEIDs.

The resulting effect of the example embodiment in figure 4 to SGW 208 is that SGW 208 has changed UE state to ECM-IDLE but keeps the downlink F-TEIDs allocated to be used at a later resume of downlink user data transport.

The resulting effect of the example embodiment in figure 4 to eNB 203 is that it keeps a UE context allocated also when the UE state has changed to ECM-IDLE and that (part of) the UE context will be used when the UE 101 at a later stage resumes.

The result of the example embodiment illustrated in figure 5 is that at least one of the nodes, e.g. at least one of the UE 101, the eNB 203, the MME 205 and the SGW 208, are in ECM-IDL mode where the RAN-CN signaling connection 111 e.g. S1-MME connection 211, exist and where the RAN-CN data connection is suspended.

### UE 101 initiated resume

**Figure 5** is a signaling diagram illustrating an example embodiment of an UE initiated resumption of the RAN CN data connection 109 between the RAN node 103 and the gateway node 108. The method in figure 5 comprises the following steps, which steps may be performed in any suitable order than described below. The initial status of this example embodiment is that at least one of the nodes, e.g. at least one of the UE 101, the eNB 203, the MME 205 and the SGW 208, are in ECM-IDLE mode with suspended RRC connection and suspended RAN-CN data connection 109, e.g. S1-U connection 209. The RAN-CN signaling connection 111, e.g. S1-MME connection 211, exists and associates the UE context in the MME 205 with the UE context for the suspended UE 101 in the eNB 203.

### Step 501

An application in the UE 101 sends data e.g. one or more IP packets.

### Step 502

The UE 101 resumes the RRC connection in its cell and sends and receives an RRC Resume message to and from the eNB 203. The encryption is started based on previously used information, e.g. the resume information stored at a previous suspend e.g. the "old key" information. Uplink traffic is enabled when step 502 is finished.

### Step 503

This step corresponds to step 311 in figure 3a, step 606 in figure 6, step 708 in figure 7, step 1108 in figure 11 and step 1210 in figure 12. The eNB 203 sends a S1-AP UE Context Resume message to the MME 205. The MME 205 will then know that the UE 101 has resumed the connection. The Context Resume message may be the signaling resume indication or the Context Resume message may comprise the signaling resume indication.

### Step 504

The UE 101 will send the uplink data (e.g. IP packets) to the eNB 203.

### Step 505

This step corresponds to step 313a in figure 3b, step 710 in figure 7 and step 1208 in figure 12. The eNB 203 will forward the uplink data to the SGW 208 using the old context data stored in eNB 203, e.g., the stored SGW F-TEID. The uplink data may be the data resume indication or the uplink data may comprise the data resume indication.

### Step 506

The SGW 208 resumes the RAN-CN data connection 109, e.g. the S1-U connection 209, based on the resume information the SGW 208 stored at the previous suspend, e.g. the stored eNB F-TEID. The RAN-CN data connection 109, e.g. the PDN connection, is in active state, e.g. ECM-CONNECTED, and both downlink and uplink data can be conveyed.

### Step 507

Bidirectional data transmission takes place between the UE 101 and the AS 230. In other words, at least one of uplink and downlink data is transmitted between the UE 101 and the AS 230.

The result of the example embodiment illustrated in figure 5 is that at least one of the nodes, e.g. at least one of the UE 101, the eNB 203, the MME 205 and the SGW 208, are in ECM-CONNECTED mode with established RRC connection and RAN-CN data connection 109, e.g. S1-U connection 209. The RAN-CN signaling connection 111 e.g. S1-MME connection 211, does also exist.

In another example embodiment of the method illustrated in figure 5, the UE 101 executes a normal RRC establishment according to 3GPP TS 23.401, V13.0.0 (2014-09) instead of steps 502 and 503. The eNB 203 does then detect that it has a stored UE context for the UE 101 and the eNB 203 decides to proceed with resume towards the CN. The message 503 in figure 5 may then be a normal S1-AP Initial UE with the UE provided NAS service request according to 3GPP TS 23.401, V13.0.0 (2014-09). Since the eNB 203 decided to proceed with a resume towards the CN it adds a new resume indication to the S1-AP Initial UE message. This indication may be used by the MME 205 to determine that it does not have to send any Modify Bearer Request message to the SGW 208 as required by to 3GPP TS 23.401, V13.0.0 (2014-09). The rest of this example embodiment may proceed as described in the steps above for figure 5.

### Network initiated resume

**Figure 6** is a signaling diagram illustrating an example embodiment of a network initiated resumption of the RAN-CN data connection 109 between the RAN node 103 and the gateway node 108. In this embodiment, the network is represented by the AS 230. The method in figure 6 comprises the following steps, which steps may be performed in any suitable order than described below. The initial status of this sequence in Figure 6 is that the nodes, e.g. at least one of the UE 101, the eNB 203, the MME 205 and the SGW 108, are in ECM-IDLE mode with suspended RRC connection and suspended RAN-CN data connection 109, e.g. S1-U connection 209. The RAN-CN signaling connection 111, e.g. S1-MME connection 211, exists and associates the UE context in the MME 205 with the UE context for the suspended UE 101 in the eNB 103.

### Step 601

The AS 230 sends data, e.g. one or more IP packets, to the PGW 210. The PGW 210 may encapsulate the data in GTP-U and forwards to the SGW 208.

GTP-U is a GTP protocol which is used for carrying user data within the CN and between the RAN and the CN. The user data may be transported in e.g. an IPv4 format, an IPv6 format etc.

### Step 602

This step corresponds to step 301 in figure 3a, step 803 in figure 8, step 1011 in figure 10 and step 1103 in figure 11. The SGW 208 has no active S1-connection and therefore it initiates a Downlink Data Notification (DDN) request to the MME 306. It may include a support notification in the DDN request either based on its support for the suspend/resume feature or based on that it has stored a suspended eNB F-TEID for the PDN connection the data arrives on.

If the capability for the UE has been negotiated earlier, then step 603 may be a normsl DDN and then the answer in step 607 may comprise a resume indication which indicates that the resume has succeeded. This involves that the SGW 108 may directly start sending downlink traffic. Thus, the message sent in step 602 does not have to have any resume supported notification.

### Step 603

The MME 205 sends a paging request to the eNB 203 on the existing RAN-CN signaling connection 111, e.g. S1-MME 211. The first paging request may be limited to only the eNB 203 where the UE 103 was connected.

### Step 604

The eNB 203 pages the UE 101 in one or more of its cells.

### Step 605

The UE 101 responds to the paging and resumes the RRC connection in its cell. This may be done by the UE 101 sending an RRC Resume message to the eNB 203. The encryption is started based on previously used information, e.g. the resume information stored at previous suspend e.g. the "old key" information. Uplink traffic is enabled when step 605 is finished.

### Step 606

This step corresponds to step 311 in figure 3b, step 503 in figure 5, step 708 in figure 7, step 1108 in figure 11 and step 1210 in figure 12. The eNB 203 sends a S1-AP UE Context Resume message to the MME 205. The Context Resume message may be the signaling resume indication or the Context message may comprise the signaling resume indication.

### Step 607

This step corresponds to step 313b in figure 3b and step 121 in figure 12. The MME 205 includes a data resume indication in a DDN acknowledge message sent to the SGW 208. The SGW resumes the RAN-CN data connection e.g. S1-U connection, based on the resume information the SGW 208 stored (e.g. step 307 in figure 3) at the previous suspend, e.g. the stored eNB F-TEID. The data connection e.g. PDN connection for the UE 101 is in active state, e.g. ECM-CONNECTED, and both downlink and uplink data can be conveyed.

### Step 608

The MME 205 acknowledges to eNB 203 by sending a S1-AP UE Context Resume Response message to the eNB 203.

### Step 609

Bidirectional data transmission is performed, e.g. data transmission in at least one of an uplink direction and a downlink direction. The uplink direction may be seen as being from the UE 101 to the network, and downlink direction may be seen as being from the network to the UE 101.

The result of the sequence illustrated in figure 6 is that at least one of the nodes, e.g. at least one of the UE 101, the eNB 203, the MME 205 and the SGW 208, are in ECM-CONNECTED mode with established RRC connection and RAN-CN data connection 109, e.g. S1-U connection 209. The RAN-CN signaling connection 111 e.g. S1-MME connection 211, does also exist.

In another example embodiment, the UE 101 may respond to the paging in step 604 with a normal RRC establishment according to 3GPP TS 23.401, V13.0.0 (2014-09). The eNB 203 does then detect that it has a stored UE context for the UE 101 and the eNB 203 may decide to proceed with resume towards the CN. The message 606 in figure 6 would then be a normal S1-AP Initial UE with the UE 101 provided NAS service request according to 3GPP TS 23.401, V13.0.0 (2014-09). Since the eNB 203 decided to proceed with a resume towards the CN it adds the resume indication to the S1-AP Initial UE message. This resume indication is used by the MME 205 to determine that it does not have to send a Modify Bearer Request message to the SGW 208 which may be required by to 3GPP TS 23.401, V13.0.0 (2014-09). The rest of this alternative implementation proceeds as described in the steps above for figure 6.

**Figure 7** is a signaling diagram illustrating an example embodiment of a network initiated resumption of the RAN-CN data connection 109 between the RAN node 103 and the gateway node 108. The network is represented by the AS 230 in figure 7. In figure 7, a resume indicator is sent to the SGW 208 is sent over the S1-U connection as a GTP-U Tunnel Management Message. The initial status of the example embodiment in figure 7 is that at least one of the nodes, e.g. at least one of the UE 101, the eNB 203, the MME 205 and the SGW 208, are in ECM-IDLE mode with suspended RRC connection and suspended RAN-CN data connection, e.g. S1-U connection. The RAN-CN signaling connection, e.g. S1-MME connection, exists and associates the UE context in the MME with the UE context for the suspended UE in the eNB.

The method in figure 7 comprises the following steps, which steps may be performed in any suitable order than described below.

### Step 701

The network represented by the AS 230 sends data, e.g. one or more IP packets, to the PGW 210.

### Step 702

The PGW 210 may encapsulate the data in GTP-U and forwards the data to the SGW 208.

### Step 703

The SGW 208 has no active S1-connection 209 and therefore sends a DDN request message to the MME 205. It may include a resume supported notification in the DDN request either based on its support for the suspend/resume feature or based on that it has stored a suspended eNB F-TEID for the PDN connection the data arrives on.

### Step 704

The MME 205 sends a paging request message to the eNB 203 on the existing RAN-CN signaling connection 111. The first paging request may be limited to only the eNB 203 where the UE 101 was connected before the suspension.

### Step 705

The eNB pages the UE 101 in one or more of its cells.

### Step 706

The UE 101 responds to the paging in step 705 and resumes the RRC connection in its cell. The encryption may be started based on previously used information, e.g. the resume information stored at previous suspend e.g. the "old key" information. Uplink traffic may be enabled when step 706 is finished.

### Step 707

The MME 205 may send a DDN Acknowledgement message to the SGW 208 which acknowledges the received DDN message in step 703.

### Step 708

This step corresponds to step 311 in figure 3b, step 503 in figure 5, step 606 in figure 6, step 1108 in figure 11 and step 1210 in figure 12. The eNB 203 sends a S1-AP UE Context Resume message to the MME 205. The Context Resume message may be the signaling resume indication or the Context Resume message may comprise the signaling resume indication.

### Step 709

The MME 205 sets the UE 101 in ECM-CONNECTED mode, and the MME 205 acknowledges to the eNB 203 by sending a S1-AP UE Context Resume Response message to the eNB 203.

### Step 710

This step corresponds to step 313a in figure 3a, step 505 in figure 5 and step 1208 in figure 12. The eNB 203 sends a data resume indicator, e.g. referred to as GTP-U Resume Indication, to the SGW 208 corresponding to the SGW F-TEID the eNB 203 has in its stored UE Context. The GTP-U Resume Indication may be a new GTP-U Tunnel Management Message compared to 3GPP TS 29.281 V12.0.0 (2014-09). The SGW 208 resumes the RAN-CN data connection 109, e.g. the S1-U connection 209, based on the resume information which the SGW 208 stored at the previous suspend, e.g. the stored eNB F-TEID. The RAN-CN data connection 109, e.g. the PDN connection, is then in active state, e.g. ECM-CONNECTED, and both downlink and uplink data may be conveyed.

### Step 711

The SGW 208 may acknowledge the GTP-U Resume Indication by sending a GTP-U Resume Response message to the eNB 203. The GTP-U Resume Response may be a new GTP-U Tunnel Management Message compared to 3GPP TS 29.281 V12.0.0 (2014-09).

### Step 712

Bidirectional data transmission is performed, e.g. data transmission in at least one of an uplink direction and a downlink direction. The uplink direction may be seen as being from the UE 101 to the network, and downlink direction may be seen as being from the network to the UE 101.

The result of the example embodiment in figure 7 is that at least one of the nodes, e.g. at least one of the UE 101, the eNB 203, the MME 205 and the SGW 208, are in ECM-CONNECTED mode with established RRC connection and RAN-CN data connection 109, e.g. S1-U connection 209. The RAN-CN signaling connection 111, e.g. S1-MME connection 211, does also exist.

In another example embodiment, the UE responds to the paging in step 705 by a normal RRC establishment according to 3GPP TS 23.401, V13.0.0 (2014-09). The eNB does then detect that it has a stored UE context for the UE 101 and the eNB 203 decides to proceed with resume towards the CN. The message sent in step 708 in figure 7 may then be a normal S1-AP Initial UE with the UE provided NAS service request according to 3GPP TS 29.281 V12.0.0 (2014-09). Since the eNB 203 decided to proceed with a resume towards the CN it may add a new resume indication to the S1-AP Initial UE message. The rest of this example embodiment proceeds as described in the steps above in figure 7.

### Network initiated resume (new eNB)

**Figure 8** is a signaling diagram illustrating an example embodiment of a network initiated resumption of the connection between the RAN node 103 and the gateway node 108 when the UE 101 connects to a new eNB 203, e.g. after the UE 101 has moved to a cell served by a new eNB 203. The initial status of the example embodiment in figure 8 is that at least one of the nodes, e.g. the UE 101, the eNB 203, the MME 205 and the SGW 208, are in ECM-IDLE mode with suspended RRC connection and suspended RAN-CN data connection 109, e.g. S1-U connection 209. The RAN-CN signaling connection 111, e.g. S1-MME connection 211, exists and associates the UE context in the MME 205 with the UE context for the suspended UE 101 in the eNB 203. The method in figure 8 comprises the following steps, which steps may be performed in any suitable order than described below.

### Step 801

The AS 203 sends data, e.g. one or more IP packets, to the PGW 210.

### Step 802

The PGW 210 may encapsulate the data in GTP-U and forward the data to the SGW 208.

### Step 803

This step corresponds to step 301 in figure 3a, step 602 in figure 6, step 1011 in figure 10 and step 1103 in figure 11. The SGW 208 has no active S1-connection and therefore it initiates a DDB request to the MME 205. It may include a resume supported notification in the DDN request either based on its support for the suspend/resume feature or based on that it has stored a suspended eNB F-TEID for the PDN connection the data arrives on. When the MME 205 has received the DDN it may sets a timer, e.g. a T3-respone timer, to ensure that the MME 205 acknowledges the DDN before the SGW 208 retransmits the DDN.

### Step 804

The MME 205 sends a paging request to the old eNB 203 on the existing RAN-CN signaling connection 111. The first paging request may be limited to only the old eNB where the UE was connected.

### Step 805

The old eNB 203 pages the UE 101 in one or more of its cells. Since the UE 101 has moved to a cell in another eNB 230, e.g. the new eNB 203, the UE 101 does not receive the paging and does not respond to the paging, e.g. the paging is lost.

### Step 806

After some MME specific time without having received any response from the UE 101, the MME 205 escalates the paging to more cells and eNBs 203.

### Step 808

A new eNB 203, e.g. the eNB handling the cell where the UE 101 camps, successfully sends a paging message to the UE 101.

### Step 809

If the MME 205 has not received any paging response from the UE 101 before the timer, e.g. the T3-RESPONSE, expires, the MME 205 may send a DDN Acknowledgement message to the SGW 208. No resume indication is included in the DDN Acknowledgement message.

If the MME 205 has received a paging response before the timer timeouts, but as a normal S1-AP Initial UE with a NAS Service Request instead of a S1-AP UE Context Resume message, the MME 205 may send a DDN Ack to the SGW 208 without any resume indication included in the DDN Ack. If the MME 205 has received a paging response before timer timeout, with a S1-AP UE Context Resume, the MME 205 may send a DDN Ack to the SGW with a resume indication included in the DDN Ack.

### Step 810

Since the UE 101 has moved to another cell, the eNB 203 it responds with normal RRC establishment according to 3GPP TS 23.401, V13.0.0 (2014-09) and sends a NAS Service Request to the MME 205.

### Step 811

The MME 205 proceeds with a normal response according to 3GPP TS 23.401, V13.0.0 (2014-09) and sends e.g. a Modify Bearer Request message to the SGW 208 with information about the new eNB 203 (e.g. eNB F-TEID) where the UE 101 camps. The SGW 208 sets the RAN-CN data connection 109 e.g. PDN connection to active state, e.g. ECM-CONNECTED, and both downlink and uplink data can be conveyed.

### Step 812

The MME 205 detects that it has an old RAN-CN signaling connection 111, e.g. S1-MME connection 211, for the UE 101 and sends an S1-AP UE Context Release message to that old eNB 203.

### Step 813

Bidirectional data transmission is performed, e.g. data transmission in at least one of an uplink direction and a downlink direction.

The result of the example embodiment illustrated in figure 8 is that the nodes, e.g. at least one of the UE 101, the eNB 203, the MME 205 and the SGW 208, are in ECM-CONNECTED mode with established RRC connection and RAN-CN data connection 109, e.g. S1-U connection 209. The RAN-CN signaling connection 111, e.g. S1-MME connection 211, does also exist.

### UE initiated resume (new eNB)

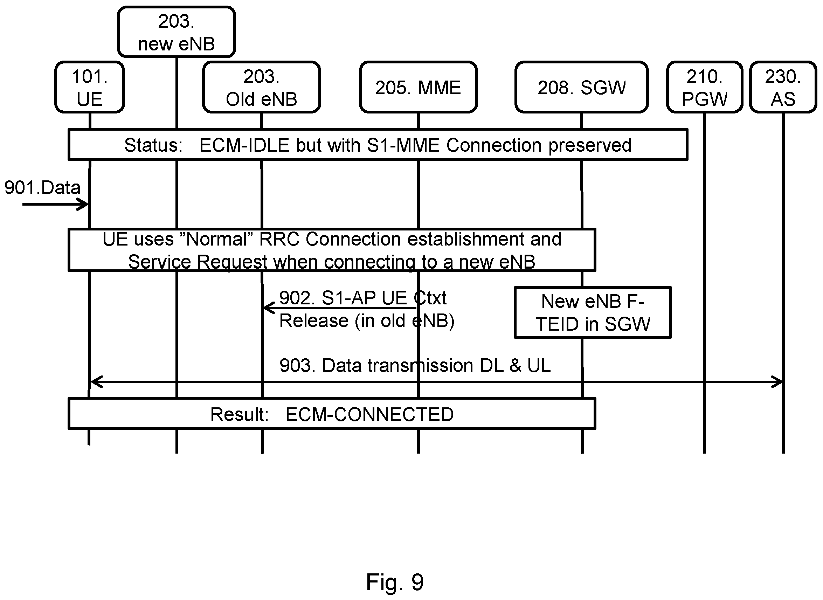

**Figure 9** is a signaling diagram illustrating an example embodiment of a UE initiated resumption of the RAN-CN data connection 109 between the RAN node 103 and the gateway node 108 when the UE 101 connects to a new eNB 203. The initial status of this example embodiment is that at least one of the nodes, e.g. at least one of the UE 101, the old eNB 203, the MME 205 and the SGW 208, are in ECM-IDLE mode with suspended RRC connection and suspended RAN-CN data connection 109, e.g. S1-U connection 209. The RAN-CN signaling connection 111, e.g. S1-MME connection 211, exists and associates the UE context in the MME 205 with the UE context for the suspended UE 101 in the old eNB 203. The new eNB 203 does not have any information indicating the state for the UE 101. The method in figure 9 comprises the following steps, which steps may be performed in any suitable order than described below.

### Step 901

At least one application in the UE 101 sends data, e.g. one or more IP packets.

The UE 101 have changed eNB 203, e.g. to the new eNB 203, so that RRC resume is not possible. The UE falls back to doing a normal RRC establishment and service request according to 3GPP TS 23.401, V13.0.0 (2014-09).

### Step 902

The MME 205 will on top of the normal service request procedure send a S1-AP UE Context Release message to the old eNB 203. This will indicate to the old eNB that it can release the information stored for the UE 101.

The SGW 208 will as part of the normal service request procedure receive the F-TEID for the new eNB. The SGW 208 may then also remove the old stored information for the RAN-CN data connection 109 to the old eNB 203.

### Step 903

Bidirectional data transmission is performed, e.g. data transmission in at least one of an uplink direction and a downlink direction.

The result of the example embodiment in figure 9 is that the nodes, e.g. at least one of the UE 101, the new eNB 203, the MME 205 and the SGW 208, are in ECM-CONNECTED mode with established RRC connection and RAN-CN data connection 109, e.g. the S1-U connection 209. The RAN-CN signaling connection 111, e.g. the S1-MME connection 211, does also exist. No state for the UE 101 is stored in the old eNB 203.

### Suspend (lost data suspend indication)

**Figure 10** is a signaling diagram illustrating an example embodiment of a suspension of the RAN-CN data connection 109 between the RAN node 103 and the gateway node 108 when the indication of the RAN-CN data connection suspension is lost. The initial status of this example embodiment is that at least one of the nodes, e.g. at least one of the UE 101, the eNB 203, the MME 205 and the SGW 208, are in state ECM-CONNECTED. A "Normal" RRC Connection establishment and Service Request are performed at before step 1001 of the method is executed. The method in figure 10 comprises the following steps, which steps may be performed in any suitable order than described below.

### Step 1001

The UE 101 sends data to the AS 203 or receives data from the AS 230 or both.

### Step 1002

The UE 101 becomes inactive and an inactivity timer supervised in eNB 203 times out.

### Step 1003

This step corresponds to step 304 in figure 3a and step 403 in figure 4. The timeout triggers eNB 203 to send a S1-AP UE Context Suspend Request message to the MME 205 to indicate that the UE 101 is no longer directly reachable with signaling and also that the eNB 203 keeps UE user plane resources allocated. The Context Suspend Request message may be the signaling suspend indication or the Context Suspend Request message may comprise the signaling suspend indication.

### Step 1004

The MME 205 replies to eNB 203 with a S1-AP UE Context Suspend Accept message to inform the eNB 203 about that MME 205 has received and accepted the information provided by UE Context Suspend Request message in step 1003.

### Step 1005

This step corresponds to step 306 in figure 3a and step 405 in figure 4. The eNB 203 sends a Data Suspend Indication to the SGW 208 to inform the SGW 208 about that the UE 101 can no longer be reached by downlink user data. Due to a failure the Data Suspend Indication does not reach the SGW 208. The result is that the UE 101 is in ECM-IDLE state with the RAN-CN signaling connection 111 is preserved and that the UE state in SGW 208 remains to be ECM-CONNECTED.

### Step 1006

The eNB 203 sends a RRC Connection suspend message to the UE 101.

### Step 1007

The AS 203 sends data, e.g. one or more IP packets, to the PGW 210.

### Step 1008

The PGW 210 may encapsulate the data in GTP-U and forward the data to the SGW 208.

### Step 1009

The SGW 208 handles the UE 101 in state ECM-CONNECTED and transmits the user data as GTP-U Data to the eNB 203.

### Step 1010

This step corresponds to step 306 in figure 3a and step 405 in figure 4. The eNB 203 has already sent a Data Suspend Indication in step 1005 and does therefore not expect to receive the GTP-U Data in step 1009. Therefore, the eNB 203 sends a GTP-U Error Indication to the SGW 208. After a sent GTP-U Error Indication the eNB 203 continues to handle the UE bearers as suspended for the UE 101. Thus, the GTP-U Error indication may be seen as resending the Data Suspend Indication to the SGW 208. The GTP-U Error indication may comprise the data suspend indication or the GTP-U Error indication may be the data suspend indication.

### Step 1011

This step corresponds to step 301 in figure 3a, step 602 in figure 6, step 803 in figure 8 and step 1103 in figure 11. The GTP-U Error Indication in step 1010 triggers SGW 208 to change UE state to ECM-IDLE and suspended and as a result send a GTP-C DDN optionally comprising a resume support notification of that this UE 101 may be resumed.

### Step 1012

The MME 205 which receives the DDN in step 1011 and an optionally comprised resume support notification to select paging scope and to send paging to the eNB 203.

The resulting effect of the example embodiment in figure 10 to the MME 205 is that the MME 205 is aware of that the UE 101 is no longer reachable and that eNB 203 is able to at a later resume of uplink data transport use saved uplink data F-TEIDs. The MME 205 is also prepared to receive a DDN as a trigger to start paging the UE 101.

The resulting effect of the example embodiment in figure 10 to the SGW 208 at a failed delivery of a GTP-U Suspend Indication (step 1005) is that the continued flow of events anyway will cause the SGW 208 to change the UE state to ECM-IDLE and to keep the downlink F-TEIDs allocated to be used at a later resume of downlink user data transport.

The resulting effect of the example embodiment in figure 10 to the eNB 203 is that it keeps a UE context allocated also when eNB 203 has received unexpected GTP-U downlink data and responded with GTP-U Error Indication.

### Network initiated resume (timer expired)

**Figure 11** is a signaling diagram illustrating an example embodiment of a network initiated resumption of the RAN-CN data connection 109 between the RAN node 103 and the gateway node 108 when a timer expires. The expiry of the timer may be due to that the UE 101 is slow in sending a response. The initial status of the example embodiment in figure 11 is that at least one of the nodes, e.g. at least one of the UE 101, the eNB 203, the MME 205 and the SGW 208, are in ECM-IDLE mode with suspended RRC connection and suspended RAN-CN data connection 109, e.g. the S1-U connection 209. The RAN-CN signaling connection 111, e.g. the S1-MME connection 211, exists and associates the UE context in the MME 205 with the UE context for the suspended UE 101 in the eNB 203. The method in figure 11 comprises the following steps, which steps may be performed in any suitable order than described below.

### Step 1101

The AS 230 sends data, e.g. one or more IP packets, to the PGW 210.

### Step 1102

The PGW 210 may encapsulate the received data in GTP-U and forwards the data to the SGW 208.

### Step 1103

This step corresponds to step 301 in figure 3a, step 602 in figure 6, step 803 in figure 8 and step 1011 in figure 10. The SGW 208 has no active S1-connection and therefore it initiates a Downlink Data Notification request to the MME 205. It may include a resume supported notification in the DDN request either based on its support for the suspend/resume feature or based on that it has stored a suspended eNB F-TEID for the PDN connection which the data arrives on. When the MME 205 has received the DDN it sets a timer, e.g. a T3-RESPONSE timer, to ensure it acknowledges the DDN before the SGW 208 retransmits the DDN.

### Step 1104

The MME 205 sends a paging request to the eNB 203 on the existing RAN-CN signaling connection 111. The first paging request may be limited to only the eNB 203 where the UE 101 was connected.

### Step 1105

The eNB 203 pages the UE 101 in one or more of its cells by sending a paging request to the UE 101.

### Step 1106

If the MME 205 has not received any paging response from the UE 101 before the timer, e.g. the T3-RESPONSE, expires, the MME 205 sends a DDN Acknowledgement message to the SGW 208. No resume indication is included in the DDN Acknowledgement message.

### Step 1107

The UE 101 responds to the paging and resumes the RRC connection in its cell. The encryption may be started based on previously used information, e.g. the resume information stored at previous suspend e.g. the "old key" information. Uplink traffic may be enabled when step 1107 is finished.

### Step 1108

This step corresponds to step 311 in figure 3b, step 503 in figure 5, step 606 in figure 6, step 708 in figure 7 and step 1210 in figure 12. The eNB 203 sends a S1-AP UE Context Resume message to the MME 205. The Context Resume message may be the signaling resume indication or the Context Resume message may comprise the signaling resume indication.

### Step 1109

Since the MME 205 has already sent the DDN Ack to the SGW 208 in step 1106, the MME 205 may in on embodiment send a normal Modify Bearer Request (MBR) message or Modify Access Bearers Request (MABR) message to notify the SGW 208 to set the data connection e.g. PDN connection to active state, e.g. the ECM-CONNECTED. The SGW 208 uses the eNB F-TEIDs in the MBR/MABR message to replace the stored suspended eNB F-TEID in the SGW 208.

### Step 1110

The SGW 208 acknowledges the MBR/MABR message by sending a Modify Bearer Response message to the MME 205.

### Step 1111

Bidirectional data transmission is performed, e.g. data transmission in at least one of an uplink direction and a downlink direction.

The result of the example embodiment in figure 11 is that at least one of the nodes, e.g. at least one of the UE 101, the eNB 203, the MME 205 and the SGW 208, are in ECM-CONNECTED mode with established RRC connection and RAN-CN data connection 109, e.g. S1-U connection 209. The RAN-CN signaling connection 111, e.g. S1-MME connection 211, does also exist.

In another example embodiment, the MME 205 responds to the 1107 S1-AP UE Context Resume message as is described for figure 7 steps 708 and 709. The eNB 203 does then send message 710 to the SGW 208 to resume the RAN-CN data connection 109, e.g. S1-U connection 209. The SGW 208 responds with the message in step 711.

In a further example embodiment, the UE 101 responds to the paging in step 1107 with a normal RRC establishment according to 3GPP TS 23.401, V13.0.0 (2014-09). The eNB 203 does then detect that it has a stored UE context for the UE 101 and the eNB 203 decides to proceed with resume towards the CN. The message 1108 in figure 11 may then be a normal S1-AP Initial UE with the UE provided NAS service request according to 3GPP TS 23.401, V13.0.0 (2014-09). Since the eNB 203 decided to proceed with a resume towards the CN it may add a new resume indication to the S1-AP Initial UE message. The rest of this example embodiment proceeds as described in the steps above in relation to figure 11, using any of the example embodiments.

### Network initiated resume (with early uplink data)

**Figure 12** is a signaling diagram illustrating an example embodiment of a network initiated resumption of the RAN-CN data connection 109 between the RAN node 103 and the gateway node 108 with early uplink data and when a timer expires. The initial status of the example embodiment in figure 11 is that at least one of the nodes, e.g. at least one of the UE 101, the eNB 203, the MME 205 and the SGW 208, are in ECM-IDLE mode with suspended RRC connection and suspended RAN-CN data connection 109, e.g. the S1-U connection 209. The RAN-CN signaling connection 111, e.g. the S1-MME connection 211, exists and associates the UE context in the MME 205 with the UE context for the suspended UE 101 in the eNB 203. The method in figure 12 comprises the following steps, which steps may be performed in any suitable order than described below.

### Step 1201

The AS 230 sends data, e.g. one or more IP packets, to the PGW 210.

### Step 1202

The PGW 210 may encapsulate the received data in GTP-U and forwards the data to the SGW 208.

### Step 1203

The SGW 208 has no active S1-connection and therefore it initiates a DDN request to the MME 205. When the MME 205 has received the DDN it sets a timer, e.g. a T3-RESPONSE timer, to ensure it acknowledges the DDN before the SGW 208 retransmits the DDN.

### Step 1204

The MME 205 sends a paging request to the eNB 203 on the existing RAN-CN signaling connection 111. The first paging request may be limited to only the eNB 203 where the UE 101 was connected.

### Step 1205

The eNB 203 pages the UE 101 in one or more of its cells by sending a paging request to the UE 101.

### Step 1206

The UE 101 responds to the paging and resumes the RRC connection in its cell. The encryption may be started based on previously used information, e.g. the resume information stored at previous suspend e.g. the "old key" information. Uplink traffic may be enabled when step 1107 is finished.

### Step 1207

The UE 101 sends uplink data to the eNB 203.

### Step 1208

The eNB 203 sends the uplink data to the AS 230 via the SGW 208. The ECM-CONNECTED stated is resumed using stored eNB F-TEID. The uplink data may be the data resume indication or the uplink data may comprise the data resume indication.

### Step 1209

Bidirectional data transmission is performed, e.g. data transmission in at least one of an uplink direction and a downlink direction.

### Step 1210

This step corresponds to step 311 in figure 3b, step 503 in figure 5, step 606 in figure 6, step 708 in figure 7 and step 1108 in figure 11. The eNB 203 sends a S1-AP Context Resume message to the MME 205. With this message, the eNB 203 informs MME 205 about the UE resume and the MME 205 changes the UE state to ECM-CONNECTED. The MME 205 is in state ECM-CONNECTED and is able to use the existing S1AP association for NAS transport and will not page the UE 101. The Context Resume message may be the signaling resume indication or the Context Resume message may comprise the signaling resume indication.

### Step 1211

The MME 205 sends a S1-AP UE Context Resume Response message to the eNB 203. The response message is a response to the Resume message in step 1210.

### Step 1212

This step corresponds to step 313b in figure 3b and step 607 in figure 6. The MME 205 sends a DDN Acknowledgement message comprising a data resume indication to the SGW 208. The MME 205 responds with "DDN Ack" (only) if the MME 205 has received the DDN, e.g. step 1203. The SGW 208 ignores the data resume indication since UL packet already resumed the connection.

The result of the example embodiment in figure 12 is that at least one of the nodes, e.g. at least one of the UE 101, the eNB 203, the MME 205 and the SGW 208, are in ECM-CONNECTED mode with established RRC connection and RAN-CN data connection 109, e.g. S1-U connection 209. The RAN-CN signaling connection 111, e.g. S1-MME connection 211, does also exist.

There may be two different embodiments for handling errors, A (downlink data triggered) and B (uplink data triggered) which now will be described.

### A) DL data triggered

The MME 205 has received a DDN from the SGW 208 in step 1203, and the MME 205 must conclude the procedure and send a response message DDN Ack before timeout of the timer.
a) The MME 205 receives an S1AP UE Context Resume before timeout of the timer. Then the MME 205 makes use of the embodiments herein and confirms the state change by including a resume indicator in the DDN Ack message in step 1212. With this response, the SGW 208 is informed about that the UE 101 is reachable for downlink user data. Consequently, the SGW 208 changes the UE state to connected and starts to send downlink user data (step 1209).
b) If the MME 105 does not receive an S1AP UE Context Resume before timeout of the timer, then the MME 105 sends a normal DDN Ack (just before an anticipated timeout of the timer at the SGW 208). When the SGW 208 receives a normal DDN Ack the SGW 208 continues with no change:
   1) If the SGW 208 after that receives a Modify Bearer Request / Modify Access Bearer Request it changes the UE state to connected and uses data in the message to establish the RAN-CN data connection 109.
   2) If the SGW 208 after that receives inband S1-U signaling from the last eNB 203, then the SGW 308 does not_accept a change state to connected (since the UE state in the SGW 208 is no longer S1-U Suspended).
   3) If the SGW 208 after that receives inband S1-U signaling including a resume indicator from the last eNB 203, then the SGW 208 accepts a change state to connected.

About case b)-2): The reason for the fall back to normal UE state handling in the SGW 208 after receiving an ordinary DDN Acknowledgement message is that the SGW 208 may not be aware of the source of UL user data. In case there is a change of eNB 203 and the SGW 208 is unable to detect source of uplink user data, the result may be that SGW 208 starts to send downlink user data using the no longer valid DL F-TEID to the old eNB 203. The old eNB 203 may respond with a GTP-U Error Indication and by that be at risk of causing the SGW 208 to start with error handling of its UE context. For that reason, the SGW 208 may fallback to normal UE state handling when it receives a "DDN Ack" without a resume indicator (when it expects to receive one). Using option b) 3) may resolve this. Thus, it may be necessary to include a resume indicator in uplink inband signaling from the eNB 203 to enable the SGW 208 to differentiate between a scenario of resume versus uplink data from a new eNB 203. Only in case of RAN-CN data connection resume it may be ok for the SGW 208 to start downlink user data transport.

### B) UL data triggered

The MME 205 has not received a DDN and the MME 205 may as a consequence not send any GTPv2 message at the S11 connection when the MME 205 receives a S1AP UE Ctxt Resume message. There is no need for S11-signaling since the uplink user data comprising a resume indicator is expected to cause the SGW 208 to change the UE state to connected. The MME 205 may change UE state when it receives the S1-AP UE Context Resume message. If the eNB 203 does not receive a S1-AP UE Context Resume Response message, then the eNB 203 applies error handling by RRC idle and cause the UE 101 to change state to idle. The UE 101 may after that be forced to return using legacy Service Request procedures.

The example embodiment illustrated in figure 12 is either triggered by DL user data sent to the SGW 108 and the resulting signaling (including steps 1201-1205), or triggered by UL user data sent by the eNB 103 to the SGW 108 (not including steps 1201-1205). The flow of events in the example embodiment in figure 12 is that signaling at the RAN-CN data connection 109 between the eNB 203 and the SGW 108 occurs in advance of signaling from the eNB 203 to the MME 205. In this flow, user data transport is enabled from inband S1-U signaling (indicated with A in figure 12). In parallel, the eNB 203 informs the MME 205 about that the UE 101 has resumed by sending S1-AP UE Context Resume message in step 1210 (indicated with B in figure 12).

If the MME 105 does not receive the S1-AP UE Context Resume message, the MME 205 may believe that the UE 101 is suspended and the MME 205 will try to reach the UE 101 by paging. However, a UE 101 in state ECM-CONNECTED does not respond to paging. A suspended UE 101 cannot be reached with NAS signaling. Thus, the MME 205 does not reach the UE 101 with MT Call (CSFB), SMS, or Bearer handling. To handle this, it may be required that the eNB 203 must receive a response message, the S1AP UE Ctxt Resume Response from the MME 205 in step 1211, to accept the RRC Resume and continued use of S1-U for the UE 101.

The eNB 203 may in the meantime allow a UE 101 to resume and use user data transport since the eNB 203 expects the S1-AP Resume to conclude successfully. With the example embodiment in figure 12, the current serialized signaling eNB 203 -> MME 205 -> SGW 208 -> MME 205 -> eNB 203, is instead be performed by the eNB 203 to the MME 205 and the SGW 208 in parallel.

An advantage with the example embodiment in figure 12 is that the eNB 203 may be able to start transport of UL user data faster than otherwise. The SGW 208 may enable downlink user data as an effect of that uplink user data has become enabled (there is no waiting for a confirmation from the MME 205).

### Capability signaling

The capability signaling mention e.g. in steps 301 and 302 in relation to figure 3 will now be described in more detail.

The nodes RAN node 103, the mobility management node 105 and the gateway node 108 may agree on if the feature for handling of at least one of suspension and resumption should be used or not. This may be done per node or per UE 101.

An advantage of deciding per UE 101 may be that it is then possible to have policies or other decision criteria's in the nodes for deciding if the feature should be used. One example may be that the feature should not be used for fast moving UEs 101 and if the mobility management node 106 knows that it is the case for an UE 101 that attaches, it may turn off the feature for that UE 101.

So, capability may be signaled between the RAN node 103 and the mobility management node 105 and between the mobility management node 105 and the gateway node 108. Example embodiments are given below for both these cases when capability is exchanged per node and per UE 101.

### RAN node - mobility management node

First, the signaling between the RAN node 103 and the mobility management node 105 will be described. **Figures 13a****-d** are signaling diagrams which illustrate example embodiments of the capability signaling between the RAN node 103 and the mobility management node 105 e.g. on the S1AP protocol.

### Signal capability per UE

**Figures 13a** illustrates example embodiments of the signaling capability per UE 101. Figure 13a uses an example where the UE 101 attaches to E-UTRAN. The method seen in figure 13a comprises the following steps, which steps may be performed in any suitable order than described below:

### Step 1301a

This step corresponds to step 302 in figure 3a. The mobility management node 105 sends an Initial Context Setup Request message to the RAN node 103. This message may comprise a parameter that specifies if at least one of the mobility management node 105 and the gateway node 108 support the feature and want to use it for that UE 101.

### Step 1302a

This step corresponds to step 302 in figure 3a. The RAN node 103 sends an Initial Context Setup Response message to the mobility management node 105. This message may be in response to the message in step 1301a. The Initial Context Setup Response message may comprise a parameter that specifies if the RAN node 103 supports the feature of handling at least one of suspension and resumption and want to use it for that UE 101.

**Figures 13b** illustrates example embodiments of the signaling capability per UE 101. Figure 13b uses an example where the UE 101 is handed over to a new RAN node 103. The new RAN node 103 may also be referred to as a target RAN node 103. The method seen in figure 13b comprises the following steps, which steps may be performed in any suitable order than described below:

### Step 1301b

This step corresponds to step 302 in figure 3a. The mobility management node 105 sends a Handover Request message to the target RAN node 103. The Handover Request message comprises a parameter that specifies if at least one of the mobility management node 105 and the gateway node 108 supports the feature of handling at least one of resumption and suspension and if an of the nodes want to use it for that UE 101.

### Step 1302b

This step corresponds to step 302 in figure 3a. The target RAN node 103 sends a Handover Request Acknowledge message to the mobility management node 103. The Acknowledge message may be a response to the Handover Request message in step 1301b. The Handover Request Acknowledge message comprises a parameter that specifies if the target RAN node 103 supports the feature of handling at least one of resumption and suspension and want to use it for that UE 101.

**Figures 13c** illustrates example embodiments of the signaling capability per UE 101. Figure 13c uses an example of a path switch request. The method seen in figure 13c comprises the following steps, which steps may be performed in any suitable order than described below:

### Step 1301c

This step corresponds to step 302 in figure 3a. The RAN node 103 sends a Path Switch Request message to the mobility management node 105. The Path Switch message comprises a parameter that specifies if the RAN node 103 supports the feature of handling at least one of resumption and suspension and if it wants to use it for that UE 101.

### Step 1302c

This step corresponds to step 302 in figure 3a. The mobility management node 105 sends a Path Switch Request Acknowledge message to the RAN node 103. The Path Switch Request Acknowledge message may be a response to the Path Switch Request message in step 1301c. The a Path Switch Request Acknowledge message comprises a parameter that specifies if at least one of the mobility management node 105 and the gateway node 108 supports the feature of handling at least one of resumption and suspension and if at least one of them wants to use it for that UE 101.

### Signal capability per node

**Figure 13d** illustrates example embodiments of the signaling capability per node. Figure 13c uses an example of a RAN node 103 setup of a connection with the mobility management node 105. The example is extended with the signaling of "per-node" capability information for the suspend/resume feature. The method seen in figure 13d comprises the following steps, which steps may be performed in any suitable order than described below:

### Step 1301d

This step corresponds to step 302 in figure 3a. The RAN node 103 sends an S1 Setup Request message to the mobility management node 105. The Setup Request message may comprise a parameter that specifies if RAN node 103 supports the feature of handling at least one of resumption and suspension and if at least one of them wants to use it for that UE 101.

### Step 1302d

This step corresponds to step 302 in figure 3a. The mobility management node 105 sends an S1 Setup Response message to the RAN node 103. The S1 Setup Response message may be a response to the S1 Setup Request message in step 1301d. The Setup Request message may comprise a parameter that specifies if mobility management node 105 supports the feature of handling at least one of resumption and suspension and if at least one of them wants to use it for that UE 101.

### Mobility management node - gateway node

Secondly, the signaling between the mobility management node 105 and the gateway node 108 will be described. In the following, GTPv2 (specified in 3GPP TS 29.27 V12.6.0) has been used as baseline.

### Signal capability per UE

In one embodiment for signal capability per UE 101, an Extend Create Session Request may be transmitted from the mobility management node 105 to the gateway node 108 e.g. using the S11 connection. The Extend Create Session Request message may comprise a parameter that specifies if the mobility management node 105 supports the feature of handling at least one of resumption and suspension and want to use it for that UE 101. The gateway node 108 may send an Extend Create Session Response to the mobility management node 105 e.g. on the S11 interface. The Extend Create Session Response may comprise a parameter that specifies if the gateway node 108 supports the feature of handling at least one of resumption and suspension and want to use it for that UE 101. Note that using these signals for exchanging capability may not provide RAN node capability information to the gateway node 108. This may be because the create session request/response is done before the S1AP capability exchange on S1AP. This is not any problem since it ok if the gateway node 108 believes the feature is on for an UE 101 but it is turned off.

### Signal capability per UE between MME and SGW but per node between eNB and MME

In another embodiment for signal capability per UE 101 between the mobility management node 105 and the gateway node 108 and per node between the RAN node 103 and the mobility management node 105. The mobility management node 105 sends an Extend Create Session Request message, e.g. on the S11 interface, to the gateway node 108. The Extend Create Session Request message may comprise a parameter that specifies if at least one of the mobility management node 105 and the RAN node 103 support the feature of handling at least one of resumption and suspension and want to use it for that UE 101. The gateway node 108 sends an Extend Create Session Response to the mobility management node, e.g. on the S11 interface. The Extend Create Session Response may be a response to the Extend Create Session Request message. The Extend Create Session Response message may comprise a parameter that specify if the gateway node 108 supports the feature of handling at least one of resumption and suspension and want to use it for that UE 101.This example embodiment may require that the mobility management node 108 already knows if the feature is supported by the RAN node 103.

### Signal capability per node

In another embodiment, the signal capability is per node. The mobility management node 108 sends a GTP Echo request message, e.g. on the S11 connection, to the gateway node 108. The GTP Echo request message comprises a parameter that specifies if the mobility management node 105 supports the feature of handling at least one of resumption and suspension. The gateway node 108 sends a GTP Echo response message, e.g. on the S11 connection, to the mobility management node 108. The GTP Echo response message comprises a parameter that specifies if the gateway node 108 supports the feature of handling at least one of resumption and suspension.

The method described above will now be described seen from the perspective of the gateway node 108. **Figure 14** is a flowchart describing the present method in gateway node 108, for handling the RAN-CN data connection 109 between the RAN node 103 and the gateway node 108 in the communications system 100. The gateway node 108 may be a SGW, or a combined SGW/PGW. The method in figure 14 comprises the followings steps to be performed by the gateway node 108:

### Step 1401

This step corresponds to step 301 in figure 3a, step 313b in figure 3b, step 602 in figure 6, step 803 in figure 8, step 1011 in figure 10 and step 1103 in figure 11. In some embodiments, the gateway node 108 receives, from a mobility management node 105, a first support notification of that the mobility management node 105 supports handling of at least one of suspension and resumption.

### Step 1402

This step corresponds to step 301 in figure 3a, step 313b in figure 3b, step 602 in figure 6, step 803 in figure 8, step 1011 in figure 10 and step 1103 in figure 11. In some embodiments, the gateway node 108 sends, to the mobility management node 105, second support notification of that the gateway node 108 supports handling at least one of suspension and resumption.

### Step 1403

This step corresponds to step 306 in figure 3a, step 405 in figure 4, step 1005 and step 1010 in figure 10. The gateway node 108 receives, from the RAN node 103 serving the UE 101, a data suspend indication indicating that at least one RAN-CN data connection 109 for the UE 101 should be suspended.

### Step 1404

This step corresponds to step 307 in figure 3b. When the data suspend indication has been received, the gateway node 108 stores resume information associated with the RAN node 103 to enable resumption of the at least one RAN-CN data connection 109.

The stored resume information may comprises a F-TEID associated with the RAN node 103.

### Step 1405

This step corresponds to step 308 in figure 3b. The gateway node 108 suspends the at least one RAN-CN data connection 109 according to the received data suspend indication.

The gateway node 108 may comprise information indicating that the UE 101 is in idle state after the at least one RAN-CN data connection 109 has been suspended.

In some embodiments, at least one RAN-CN signaling connection 111 between the RAN node 103 and the mobility management node 105 is maintained when the at least RAN-CN data connection 109 between the RAN node 103 and the gateway node 105 is suspended. At suspension, it may be preferred that the RAN CN signaling connection is at least suspended at higher protocol levels, e.g. at Non Access Stratum (NAS) level. However, in some embodiments the RAN CN signaling connection may still be present at lower protocol levels, e.g. such as the Stream Control Transmission Protocol (SCTP).

### Step 1406

This step corresponds to step 313a in figure 3b, step 313b in figure 3b, step 505 in figure 5, step 607 in figure 6, step 710 in figure 7, step 1208 and step 1212 in figure 2. The gateway node 108 receives a data resume indication indicating that the at least one RAN-CN data connection 109 for the UE 101 should be resumed.

In some embodiments, the data resume indication is received in response to the second support notification sent to the mobility management node. The first support notification may then be comprised in the data resume indication.

The data resume indication may be received from the RAN node 103 or from the mobility management node 105.

In some embodiments, the data resume indication is received from the RAN node 103 in connection with receiving data for the UE 101 from the RAN node 103. In other embodiments, the data resume indication is received from the mobility management node 105 before transmitting data for the UE 101 to the RAN node 103. The data resume indication may be received via the control plane (e.g. S1-MME).

In some embodiments uplink payload may be received before paging. If uplink payload takes place first, the SGW 108 may use that event as well to resume the RAN-CN data connection 109.

### Step 1407

This step corresponds to step 314 in figure 3. The gateway node 108 resumes, in response to the received data resume indication, the at least one RAN-CN data connection 109 for the UE 101 using the stored resume information.

In some embodiments, the at least one RAN-CN data connection 109 is resumed when the data resume indication is received by the gateway node 108 before a timer associated with the sent second support notification expires.

The gateway node 108 may comprise information indicating that the UE 101 is in connected state after the at least one RAN-CN data connection 109 has been resumed.

Embodiments of the gateway node 108 configured to perform the method actions handling the RAN-CN data connection 109 between the RAN node 103 and the gateway node 108 for the UE 101, as described above in relation to Figure 14, is depicted in Figure 15. As mentioned above, the gateway node 108 may be a SGW or a combined SGW/PGW.

The gateway node 108 is configured to, e.g. by means of a **receiving module 1501,** receive, from the RAN node 103 serving a UE 101, a data suspend indication indicating that at least one RAN-CN data connection 109 for the UE 101 should be suspended. The receiving module 1501 may also be referred to as a receiving unit, a receiving means, a receiving circuit, means for receiving or an input unit. The receiving module 1501 may be a receiver, a transceiver etc. The receiving module 1501 may be a wireless receiver of the gateway node 108 of a wireless or fixed communications system.

The gateway node 108 is configured to, e.g. by means of a **storing module 1503,** store, when the data suspend indication has been received, resume information associated with the RAN node 103 to enable resumption of the at least one RAN-CN data connection 109. The stored resume information may comprise a F-TEID associated with the RAN node 103. The storing module 1503 may also be referred to as a storing unit, a storing means, a storing circuit or means for storing. The storing module 1503 may be a **processor 1505** of the gateway node 108.

The storing module 1503 may store the resume information in e.g. a **memory 1506** comprised in the gateway nod 108. The memory 1506 may comprise one or more memory units. The memory 1506 is arranged to be used to store data, received data streams, indications, information associated with the RAN node 103, notifications, information about connections, power level measurements, threshold values, time periods, configurations, schedulings, and applications to perform the methods herein when being executed in the gateway node 108. The memory 1506 comprises instructions executable by the processor 1505.

The gateway node 108 is configured to, e.g. by means of a **suspending module 1508,** suspend the at least one RAN-CN data connection 109 according to the received data suspend indication. The suspending module 1508 may also be referred to as a suspending unit, a suspending means, a suspending circuit or means for suspending. The suspending module 1508 may be the processor 1505 of the gateway node 108. In some embodiments, at least one RAN-CN signaling connection 111 between the RAN node 103 and the mobility management node 105 is maintained when the at least RAN-CN data connection 109 between the RAN node 103 and the gateway node 105 is suspended. At suspension, it may be preferred that the RAN CN signaling connection is at least suspended at higher protocol levels, e.g. at Non Access Stratum (NAS) level. However, in some embodiments the RAN CN signaling connection may still be present at lower protocol levels, e.g. such as the Stream Control Transmission Protocol (SCTP).

The gateway node 108 is configured to, e.g. by means of the receiving module 1501, receive a data resume indication indicating that the at least one RAN-CN data connection 109 for the UE 101 should be resumed.

The gateway node 108 is configured to, e.g. by means of a **resuming module 1510,** resume, in response to the received data resume indication, the at least one RAN-CN data connection 109 for the UE 101 using the stored resume information. The resuming module 1510 may also be referred to as a resuming unit, a resuming means, a resuming circuit or means for resuming. The resuming module 1510 may be the processor 1505 of the gateway node 108. The at least one RAN-CN data connection 109 may be resumed when the data resume indication is received by the gateway node 108 before a timer associated with the sent second support notification expires.

In some embodiments, the gateway node 108 is configured to, e.g. by means of the receiving module 1501, receive, from a mobility management node 105, a first support notification of that the mobility management node 105 supports handling of at least one of suspension and resumption.

The gateway node 108 may be configured to, e.g. by means of a **transmitting module 1513,** send, to the mobility management node 105, second support notification of that the gateway node 108 supports handling at least one of suspension and resumption. The transmitting module 1513 may also be referred to as a transmitting unit, a transmitting means, a transmitting circuit, means for transmitting or an output unit. The transmitting module 1513 may be a transmitter, a transceiver etc. The transmitting module 513 may be a wireless transmitter of the gateway node 108 of a wireless or fixed communications system.

The gateway node 108 may be further configured to, e.g. by means of the receiving module 1501, receive the data resume indication in response to the second support notification sent to the mobility management node 105. The first support notification may be comprised in the data resume indication. The data resume indication may be received from the RAN node 103 or from a mobility management node 105. The data resume indication may be received from the RAN node 103 in connection with receiving data for the UE 101 from the RAN node 103, or the data resume indication may be received from the mobility management node 105 before transmitting data for the UE 101 to the RAN node 103.

The gateway node 108 may comprise, e.g. in the memory 1506, information indicating that the UE 101 is in idle state after the at least one RAN-CN data connection 109 has been suspended. The gateway node 108 may comprise, e.g. in the memory 1506, information indicating that the UE 101 is in connected state after the at least one RAN-CN data connection 109 has been resumed.

Those skilled in the art will also appreciate that the receiving module 1501, the storing module 1503, the suspending module 1508 and the resuming module 1510 described above may refer to a combination of analog and digital circuits, and/or one or more processors configured with software and/or firmware, e.g. stored in a memory, that when executed by the one or more processors such as the processor 1505 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

In some embodiments, a first computer program may comprise instructions which, when executed on at least one processor (e.g. the processor 1505), cause the at least one processor to carry out the method in figure 14. A first carrier may comprise the first computer program, and the first carrier may be one of an electronic signal, optical signal, radio signal or computer readable storage medium.

The method described above will now be described seen from the perspective of the mobility management node 105. **Figure 16** is a flowchart describing the present method in mobility management node 105 for handling a RAN-CN signaling connection 111 between a mobility management node 105 and a RAN node 103 in a communications system 100. The mobility management node 105 may be a MME, or a SGSN, or a combined MME/SGSN. The method in figure 16 comprises the followings steps to be performed by the mobility management node 105, which steps may be performed in any suitable order than described below:

### Step 1601

This step corresponds to step 301 in figure 3a, step 313b in figure 3b, step 607 in figure 5 and step 1212 in figure 12. In some embodiments, the mobility management node 105 sends, to the gateway node 108, a first support notification of that the mobility management node 105 supports handling of at least one of suspension and resumption.

### Step 1602

This step corresponds to step 301 in figure 3a, step 602 in figure 6, step 803 in figure 8, step 1010 in figure 10 and step 1103 in figure 11. In some embodiments, the mobility management node 105 receives, from a gateway node 108 a second support notification of that the gateway node 108 supports handling of at least one of suspension and resumption.

### Step 1603

This step corresponds to step 320 in figure 3a. In some embodiments, the mobility management node 105 receives, from the RAN node 103 a third support notification of that the RAN node 103 supports handling of at least one of suspension and resumption.

### Step 1604

This step corresponds to step 302 in figure 3a. In some embodiments, the mobility management node 105 sends, to the RAN node 103, a fourth support notification of that the mobility management node 105 supports handling of at least one of suspension and resumption.

### Step 1605

This step corresponds to step 304 in figure 3a, step 403 in figure 4 and step 1003 in figure 10. The mobility management node 105 receives, from the RAN node 103 serving a UE 101, an signaling suspend indication indicating that the RAN-CN signaling connection 111 for the UE 101 should be suspended.

### Step 1606

This step corresponds to step 305 in figure 3a. The mobility management node 105 suspends the at least one RAN-CN signaling connection 111 for the UE 101 according to the received signaling suspend indication.

### Step 1607

This step corresponds to step 311 in figure 3b, step 503 in figure 5, step 606 in figure 6, step 708 in figure 7, step 1108 in figure 11 and step 1210 in figure 12. The mobility management node 105 receives, from the RAN node 103, a signaling resume indication indicating that the RAN-CA signaling connection 111 for the UE 101 should be resumed.

### Step 1608

This step corresponds to step 312 in figure 3b. In some embodiments, the mobility management node 105 resumes the RAN-CN signaling connection 111 for the UE 101 in response to the received signaling resume indication.

In some embodiments, at least one RAN-CN control plane connection 111 to the RAN node 103 for the UE 101 is maintained when the at least one RAN-CN data connection 109 between the RAN node 103 and the gateway node 108 is suspended. At suspension, it may be preferred that the RAN CN signaling connection is at least suspended at higher protocol levels, e.g. at Non Access Stratum (NAS) level. However, in some embodiments the RAN CN signaling connection may still be present at lower protocol levels, e.g. such as the Stream Control Transmission Protocol (SCTP).

### Step 1609

This step corresponds to step 313b in figure 3, step 607 in figure 6 and step 1212 in figure 12. In some embodiments, the mobility management node 105 sends, to the gateway node 108 a data resume indication indicating that the at least one RAN-CN data connection 109 for the UE 101 should be resumed. The data resume indication may be sent in response to the second support notification sent to the mobility management node 105, and the first support notification may then be comprised in the data resume indication.

The mobility management node 105 may comprise information indicating that the UE 101 is in idle state after the RAN-CN signaling connection 111 has been suspended. The mobility management node 105 may comprise information indicating that the UE 101 is in connected state after the RAN-CN signaling connection 111 has been resumed.

Embodiments of the mobility management node 105 configured to perform the method actions handling the RAN-CN, signaling connection 111 between the mobility management node 105 and a RAN node 103 in a communications system 100, as described above in relation to Figure 16, is depicted in **Figure 17**. The mobility management node 105 may be a MME or a SGSN or a combined MME/SGSN.

The mobility management node 105 is configured to, e.g. by means of a **receiving module 1701,** receive, from the RAN node 103 serving a 101, an signaling suspend indication indicating that the RAN-CN signaling connection 111 for the UE 101 should be suspended. The receiving module 1701 may also be referred to as a receiving unit, a receiving means, a receiving circuit, means for receiving or an input unit. The receiving module 1701 may be a receiver, a transceiver etc. The receiving module 1701 may be a wireless receiver of the mobility management node 105 of a wireless or fixed communications system.

The mobility management node 105 is configured to, e.g. by means of a **suspending module 1703** suspend the RAN-CN signaling connection 111 for the UE 101 according to the received signaling suspend indication. The suspending module 1701 may also be referred to as a suspending unit, a suspending means, a suspending circuit or means for suspending. The suspending module 1703 may be a **processor 1705** of the mobility management node 105. In some embodiments, at least one RAN-CN control plane connection 111 to the RAN node 103 for the UE 101 is maintained when the at least one RAN-CN data connection 109 between the RAN node 103 and the gateway node 108 is suspended. At suspension, it may be preferred that the RAN CN signaling connection is at least suspended at higher protocol levels, e.g. at Non Access Stratum (NAS) level. However, in some embodiments the RAN CN signaling connection may still be present at lower protocol levels, e.g. such as the Stream Control Transmission Protocol (SCTP).

The mobility management node 105 is configured to, e.g. by means of the receiving module 1701, receive, from the RAN node 103, a signaling resume indication indicating that the RAN-CA signaling connection 111 for the UE 101 should be resumed.

The mobility management node 105 is configured to, e.g. by means of a **resuming module 1708** configured to resume the RAN-CN signaling connection 111 for the UE 101 in response to the received signaling resume indication. The resuming module 1708 may also be referred to as a resuming unit, a resuming means, a resuming circuit or means for resuming. The resuming module 17808 may be the processor 1705 of the mobility management node 105.

The mobility management node 105 is configured to, e.g. by means of a **transmitting module 1710** configured to send, to the gateway node 108 a data resume indication indicating that the at least one RAN-CN data connection 109 for the UE 101 should be resumed. The transmitting module 1710 may also be referred to as a transmitting unit, a transmitting means, a transmitting circuit, means for transmitting or an output unit. The transmitting module 1710 may be a transmitter, a transceiver etc. The transmitting module 1710 may be a wireless transmitter of the mobility management node 105 of a wireless or fixed communications system.

The mobility management node 105 may be configured to, e.g. by means of the transmitting module 1710, send, to the gateway node 108, a first support notification of that the mobility management node 105 supports handling of at least one of suspension and resumption.

The mobility management node 105 may be configured to, e.g. by means of the receiving module 1701, receive, from a gateway node 108 a second support notification of that the gateway node 108 supports handling of at least one of suspension and resumption. The mobility management node 105 may be configured to, e.g. by means of the receiving module 1701, receive, from the RAN node 103 a third support notification of that the RAN node 103 supports handling of at least one of suspension and resumption.

The mobility management node 105 may be configured to, e.g. by means of the transmitting module 1710, send, to the RAN node 103, a fourth support notification of that the mobility management node 105 supports handling of at least one of suspension and resumption.

The mobility management node 105 may be configured to, e.g. by means of the transmitting module 1710, send the data resume indication in response to the second support notification sent to the mobility management node 105, and the first support notification may then be comprised in the data resume indication.

In some embodiments, the mobility management node 105 comprises information indicating that the UE 101 is in idle state after the RAN-CN signaling connection 111 has been suspended. In some embodiments, the mobility management node 105 comprises information indicating that the UE 101 is in connected state after the RAN-CN signaling connection 111 has been resumed. Such information may be comprised in a memory **1713** comprised in the mobility management node 105. The memory 1713 comprises one or more memory units. The memory 1713 is arranged to be used to store data, received data streams, indications, information associated with the RAN node 103, notifications, information about connections, power level measurements, threshold values, time periods, configurations, schedulings, and applications to perform the methods herein when being executed in the mobility management node 105. The memory 1713 comprises instructions executable by the processor 1705.

Those skilled in the art will also appreciate that the receiving module 1701, the suspending module 1703, the resuming module 1708 and the transmitting module 1710 described above may refer to a combination of analog and digital circuits, and/or one or more processors configured with software and/or firmware, e.g. stored in a memory, that when executed by the one or more processors such as the processor 1705 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

In some embodiments, a second computer program may comprise instructions which, when executed on at least one processor (e.g. the processor 1705), cause the at least one processor to carry out the method in figure 16. A second carrier may comprise the second computer program, and the second carrier may be one of an electronic signal, optical signal, radio signal or computer readable storage medium.

The method described above will now be described seen from the perspective of the RAN node 103. **Figure 18** is a flowchart describing the present method in RAN node 103, for handling the RAN-CN data connection 109 between the RAN node 103 and the gateway node 108 a RAN-CN signaling connection 111 between the RAN node 103 and a mobility management node 105 in the communications system 100. The method in figure 18 comprises the followings steps to be performed by the RAN node 103:

### Step 1801

This step corresponds to step 302 in figure 3a. In some embodiments, the RAN node 103 receives, from a mobility management node 105, a first support notification of that the mobility management node 105 supports handling of at least one of suspension and resumption.

### Step 1802

This step corresponds to step 302 in figure 3a. In some embodiments, the RAN node 103 sends, to the mobility management node 105, second support notification of that the gateway node 108 support at least one of suspension and resumption.

### Step 1803

This step corresponds to step 303 in figure 3a, step 402 in figure 4 and step 1002 in figure 10. The RAN node 103 determines that at least one RAN-CN data connection 109 and a RAN-CN signaling connection 111 for the UE 101 should be suspended.

### Step 1804

This step corresponds to 304 in figure 3a, step 403 in figure 4 and step 1003 in figure 10. The RAN node 103 sends, to a mobility management node 105 handling the UE 101, an signaling suspend indication indicating that the RAN-CN signaling connection 111 for the UE 101 should be suspended.

### Step 1805

This step corresponds to step 306 in figure 3a, step 405 in figure 4 and steps 1005 and 1010 in figure 10. The RAN node 103 sends, to the gateway node 108, a data suspend indication indicating that at least one RAN-CN data connection 109 for the UE 101 should be suspended.

### Step 1806

This step corresponds to step 310 in figure 3b. In some embodiments, the RAN node 103 determines that at least one of the RAN-CN data connection 109 and the RAN-CN signaling connection 111 for the UE 101 should be resumed.

### Step 1807

This step corresponds to step 311 in figure 3b, step 503 in figure 5, step 606 in figure 6, step 708 in figure 7, step 1108 in figure 11 and step 1210 in figure 12. In some embodiments, the RAN node 103 sends to the mobility management node 105 handling the UE 101, an signaling resume indication indicating that the RAN-CN signaling connection 111 for the UE 101 should be resumed.

### Step 1808

This step corresponds to step 313a in figure 3b, step 505 in figure 5, step 710 in figure 8 and step 1208 in figure 12. In some embodiments, the RAN node 103 sends, to the gateway node 108, a data resume indication indicating that the RAN-CN data connection 109 for the UE 101 should be resumed.

### Step 1809

This step corresponds to step 711 in figure 7 and step 1211 in figure 12. In some embodiments, the RAN node 103 receives, from the mobility management node 105 a response to the signaling resume indication sent to the mobility management node 105. The response indicates that the RAN-CN signaling connection 111 has been resumed.

### Step 1810

This step corresponds to step 1009 in figure 10. In some embodiments, the RAN node 103 detects that the previously sent data suspend indication indicating that the RAN-CN data connection 109 for the UE 101 should be suspended was not received by the gateway node 108. The RAN node 103 may detect that the previously sent data suspend indication was not received by the gateway node 108 by receiving downlink data from the gateway node 108. The received data may be associated with the suspended RAN-CN data connection 109.

### Step 1811

This step corresponds to step 101 in figure 10. In some embodiments, the RAN node 103 resends, to the gateway node 108, the previously sent data suspend indication indicating that the RAN-CN data connection 109 for the UE 101 should be suspended. The resent data suspend indication may be a GTP-U Error Indication or the resent data suspend indication may be comprised in the GTP-U Error Indication.

The RAN node 103 may comprise information indicating that the UE 101 is in idle state after the RAN-CN data connection 109 for the UE 101 and the RAN-CN signaling connection 111 for the UE 101 has both been suspended. The RAN node 103 may comprise information indicating that the UE 101 is in connected state after the RAN-CN data connection 109 for the UE 101 and the RAN-CN signaling connection 111 for the UE 101 has been resumed.

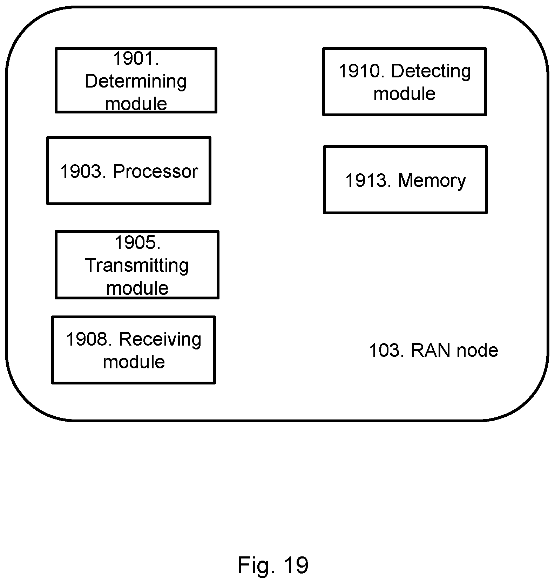

Embodiments of the RAN node 105 configured to perform the method actions handling the RAN-CN data connection 109 between a gateway node 108 and the RAN node 103 and a RAN-CN signaling connection 111 between the RAN node 103 and a mobility management node 105, as described above in relation to Figure 18, is depicted in **Figure 19****.**

The RAN node 103 is configured to, e.g. by means of an **determining module 1901** configured to determine that at least one of the RAN-CN data connection 109 and a RAN-CN signaling connection 111 for the UE 101 should be suspended. The determining module 1901 may also be referred to as a determining unit, a determining means, a determining circuit or means for determining. The determining module 1901 may be a **processor 1903** of the RAN node 103.

The RAN node 103 is configured to, e.g. by means of an **transmitting module 1905** configured to send, to a mobility management node 105 handling the UE 101, an signaling suspend indication indicating that the RAN-CN signaling connection 111 for the UE 101 should be suspended. The transmitting module 1905 may also be referred to as a transmitting unit, a transmitting means, a transmitting circuit, means for transmitting or an output unit. The transmitting module 1905 may be a transmitter, a transceiver etc. The transmitting module 1905 may be a wireless transmitter of the RAN node 103 of a wireless or fixed communications system.

The RAN node 103 is configured to, e.g. by means of the transmitting module 1905 configured to send, to the gateway node 108, a data suspend indication indicating that at least one RAN-CN data connection 109 for the UE 101 should be suspended.

The RAN node 103 is configured to, e.g. by means of the determining module 1901 determine that at least one of the RAN-CN data connection 109 and the RAN-CN signaling connection 111 for the UE 101 should be resumed.

The RAN node 103 is configured to, e.g. by means of the transmitting module 1905, send, to the mobility management node 105 handling the UE 101, an signaling resume indication indicating that the RAN-CN signaling connection 111 for the UE 101 should be resumed. The RAN node 103 is configured to, e.g. by means of the transmitting module 1095, send, to the gateway node 108, a data resume indication indicating that the RAN-CN data connection 109 for the UE 101 should be resumed.

The RAN node 103 is configured to, e.g. by means of a **receiving module 1908** configured to receive, from the mobility management node 105 a response to the signaling resume indication sent to the mobility management node 105. The response indicates that the RAN-CN signaling connection 111 has been resumed. The receiving module 1908 may also be referred to as a receiving unit, a receiving means, a receiving circuit, means for receiving or an input unit. The receiving module 1908 may be a receiver, a transceiver etc. The receiving module 1908 may be a wireless receiver of the RAN node 103 of a wireless or fixed communications system.

The RAN node 103 is configured to, e.g. by means of an **detecting module 1910** configured to detect that the previously sent data suspend indication indicating that the RAN-CN data connection 109 for the UE 101 should be suspended was not received by the gateway node 108. The detecting module 1910 may also be referred to as a detecting unit, a detecting means, a detecting circuit or means for detecting. The detecting module 1910 may be the processor 1903 of the RAN node 103. The RAN node 103 may detect that the previously sent data suspend indication was not received by the gateway node 108 by receiving downlink data from the gateway node 108. The received data is associated with the suspended RAN-CN data connection 109.

The RAN node 103 is configured to, e.g. by means of the transmitting module 1905, resend, to the gateway node 108, the previously sent data suspend indication indicating that the RAN-CN data connection 109 for the UE 101 should be suspended. The resent data suspend indication may be a GTP-U Error Indication or the resent data suspend indication may be comprised in the GTP-U Error Indication.

The RAN node 103 may comprise information indicating that the UE 101 is in idle state after the RAN-CN data connection 109 for the UE 101 and the RAN-CN signaling connection 111 for the UE 101 has both been suspended. The RAN node 103 may comprise information indicating that the UE 101 is in connected state after the RAN-CN data connection 109 for the UE 101 and the RAN-CN signaling connection 111 for the UE 101 has been resumed. Such information may be comprised in a **memory 1913.** The memory 1913 may be comprised in the RAN node 130. The memory 1913 comprises one or more memory units. The memory 1913 is arranged to be used to store data, received data streams, indications, information associated with the RAN node 103, notifications, information about connections, power level measurements, threshold values, time periods, configurations, schedulings, and applications to perform the methods herein when being executed in the RAN node 105. The memory 1913 comprises instructions executable by the processor 1903.

The RAN node 103 may be configured to, e.g. by means of the receiving module 1908, configured to receive, from a mobility management node 105, a first support notification of that the mobility management node 105 supports handling of at least one of suspension and resumption.

The RAN node 103 may be configured to, e.g. by means of the transmitting module 1905, send, to the mobility management node 105, second support notification of that the gateway node 108 support at least one of suspension and resumption.

Those skilled in the art will also appreciate that the determining module 1901, the transmitting module 1905, the receiving module 1908 and the detecting module 1910 described above may refer to a combination of analog and digital circuits, and/or one or more processors configured with software and/or firmware, e.g. stored in a memory, that when executed by the one or more processors such as the processor 1903 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

In some embodiments, a third computer program may comprise instructions which, when executed on at least one processor (e.g. the processor 1903), cause the at least one processor to carry out the method in figure 18. A third carrier may comprise the third computer program, and the third carrier may be one of an electronic signal, optical signal, radio signal or computer readable storage medium.

The present mechanism for handling the RAN-CN data connection109 between the RN node 103 and the gateway node 108 may be implemented through one or more processors, such as a processor 1505 in the gateway node arrangement depicted in Figure 15, a processor 1705 in the mobility management node arrangement depicted in figure 17 and a processor 1903 in the RAN node arrangement depicted in Figure 19, together with computer program code for performing the functions of the embodiments herein. The processor may be for example a Digital Signal Processor (DSP), Application Specific Integrated Circuit (ASIC) processor, Field-programmable gate array (FPGA) processor or micro processor. The program code mentioned above may also be provided as a computer program product, for instance in the form of a data carrier carrying computer program code for performing the embodiments herein when being loaded into at least one of the gateway node 108, the mobility management node 105 and the RAN node 103. One such carrier may be in the form of a CD ROM disc. It is however feasible with other data carriers such as a memory stick. The computer program code can furthermore be provided as pure program code on a server and downloaded to at least one of the gateway node 108, the mobility management node 105 and the RAN node 103.

Establishment of radio bearers and S1 connection requires substantial resources in the RAN node 103, the mobility management node 105 and the gateway node. By optimizing the signaling for the most common case, re-establishment in the same RAN node 103, savings in processing is done.

By saving a UE state in the RAN node 103 at release, a re-establishment in the same RAN node 103 may be faster and require less processing. A new RRC signaling between the UE 101 and the RAN node 103 may be introduced:
- RRC-suspend:
   ∘ The RRC-connection is released but the UE context is kept in the RAN node 103. The mobility management node 105 is notified and the UE 101 is set to ECM-IDLE in the mobility management node 105 but the RAN-CN signaling connection 111 is kept (as a handle to the UE context in the RAN node 103).
- RRC-resume:
   ∘ The previous RRC-connection is re-established. The mobility management node 105 is notified and the UE 101 is set to connected state in the mobility management node 105.

When the UE 101 moves to a new RAN node 103 and if the RAN node 103 has lost the UE context, the normal RRC signaling should be used. At cell change the UE 101 (tries RRC-resume, or if the UE) knows that the new cell belongs to a new RAN node 103, therefore uses normal RRC signaling.

By keeping resume information such as e.g. the eNB F-TEID, in the gateway node 108 when a PDN connection is moved to ECM-IDLE, state changes may be faster and require less processing in both the gateway node 108 and the mobility management node 105.
- At RRC-resume:
   - The RAN node 103 sends a Resume message to the mobility management node 105 to move the UE to connected state.
   - The first uplink data received in the gateway node 108 moves the PDN connection to connected state using the stored resume information.
- At RRC-suspend:
   - The RAN node 103 sends a Suspend message to the mobility management node 105 to move the UE 101 to idle state (the RAN-CN signaling connection may still be kept).
   - The RAN node 103 sends a data suspend indication to the gateway node 108, which moves the PDN connection to idle state (while still keeping the resume information associated with the RAN node 103).

Paging may be optimized to first try the single RAN node 103 with the kept RAN-CN signaling connection 111 when a UE 101 is suspended.

The embodiments herein are not limited to the above described embodiments. Therefore, the above embodiments should not be taken as limiting the scope of the embodiments, which is defined by the appending claims.

It should be emphasized that the term "comprises/comprising" when used in this specification is taken to specify the presence of stated features, integers, steps or components, but does not preclude the presence or addition of one or more other features, integers, steps, components or groups thereof. It should also be noted that the words "a" or "an" preceding an element do not exclude the presence of a plurality of such elements.

The term "configured to" used herein may also be referred to as "arranged to", "adapted to", "capable of" or "operative to".

## Claims

1. A method in a gateway node (108) for handling a Radio Access Network-Core Network, RAN-CN, data connection (109) between the gateway node (108) and an Radio Access Network, RAN, node (103) in a communications system (100),
the method comprising:
*receiving* (306, 405, 1005, 1010, 1403), from the RAN node (103) serving a User Equipment, UE, (101), a data suspend indication indicating that at least one RAN-CN data connection (109) for the UE (101) should be suspended;
when the data suspend indication has been received, *storing* (307, 1404) resume information associated with the RAN node (103) to enable resumption of the at least one RAN-CN data connection (109);
*suspending* (308, 1405) the at least one RAN-CN data connection (109) according to the received data suspend indication;
*receiving* (313a, 313b, 505, 607, 710, 1208, 1212, 1406) a data resume indication indicating that the at least one RAN-CN data connection (109) for the UE (101) should be resumed; and
*resuming* (314, 1407), in response to the received data resume indication, the at least one RAN-CN data connection (109) for the UE (101) using the stored resume information,
**characterized in that** the method further comprises the following steps being performed prior to the above steps:
*receiving* (301, 313b, 602, 803, 1011, 1103, 1401), from a mobility management node (105), a first support notification of that the mobility management node (105) supports handling of at least one of suspension and resumption, and
*sending* (301, 313b, 602, 803, 1011, 1103, 1402), to the mobility management node (105), second support notification of that the gateway node (108) supports handling at least one of suspension and resumption.

2. The method according to claim 1, further comprising:
receiving (313b, 607, 1406) the data resume indication in response to the second support notification sent (301, 602, 1402) to the mobility management node (105), and wherein the first support notification is comprised in the data resume indication.

3. The method according to claim 2, wherein the at least one RAN-CN data connection (109) is resumed (314, 1407) when the data resume indication is received by the gateway node (108) before a timer associated with the sent second support notification expires.

4. The method according to any one of claims 1-3, wherein the data resume indication is received (313a, 505, 710, 1208, 1406) from the RAN node (103) or received (313b, 607, 1212, 1406) from a mobility management node (105)

5. The method according to claim 4, wherein the data resume indication is received (313a, 505, 710, 1208, 1406) from the RAN node (103) in connection with receiving data (309, 507, 712) for the UE (101) from the RAN node (103).
or
wherein the data resume indication is received (313b, 607, 1212, 1406) from the mobility management node (105) before transmitting data (309, 507, 712) for the UE (101) to the RAN node (103).

6. The method according to any one of claims 1-5, wherein the gateway node (108) comprises information indicating that the UE (101) is in idle state after the at least one RAN-CN data connection (109) has been suspended; and
wherein the gateway node (108) comprises information indicating that the UE (101) is in connected state after the at least one RAN-CN data connection (109) has been resumed.

7. The method according to any one of claims 1-6, wherein the stored resume information comprises a Fully-Qualified Tunnel Endpoint Identifier, F-TEID associated with the RAN node (103).

8. The method according to any one of claims 1-7, wherein at least one RAN-CN signaling connection (111) between the RAN node (103) and the mobility management node (105) is maintained when the at least RAN-CN data connection (109) between the RAN node (103) and the gateway node (105) is suspended.

9. The method according to any one of claims 1-8, wherein the gateway node (108) is a Serving GateWay, SGW, or a combined SGW and Packet data network Gateway, SGW/PGW.

10. A gateway node (108) for handling a Radio Access Network-Core Network, RAN-CN, data connection (109) between the gateway node (108) and an Radio Access Network, RAN, node (103) in a communications system (100),
the gateway node (108) being configured to
receive, from the RAN node (103) serving a User Equipment, UE, (101), a data suspend indication indicating that at least one RAN-CN data connection (109) for the UE (101) should be suspended;
when the data suspend indication has been received, store resume information associated with the RAN node (103) to enable resumption of the at least one RAN-CN data connection (109);
suspend the at least one RAN-CN data connection (109) according to the received data suspend indication;
receive a data resume indication indicating that the at least one RAN-CN data connection (109) for the UE (101) should be resumed; and to
resume, in response to the received data resume indication, the at least one RAN-CN data connection (109) for the UE (101) using the stored resume information, **characterized in that** the gateway node (108) is further configured to:
receive, from a mobility management node (105), a first support notification of that the mobility management node (105) supports handling of at least one of suspension and resumption, and to
send, to the mobility management node (105), second support notification of that the gateway node (108) supports handling at least one of suspension and resumption,
prior to the above actions.

11. The gateway node (108) according to claim 10, further configured to:
receive the data resume indication in response to the second support notification sent (301, 602, 1402) to the mobility management node (105), and wherein the first support notification is comprised in the data resume indication.

12. The gateway node (108) according to any one of claims 10-11, wherein the at least one RAN-CN data connection (109) is resumed (314, 1407) when the data resume indication is received by the gateway node (108) before a timer associated with the sent second support notification expires.

13. The gateway node (108) according to any one of claims 10-12, wherein the data resume indication is received (313a, 505, 710, 1208, 1406) from the RAN node (103) or received (313b, 607, 1212, 1406) from a mobility management node (105)

14. The gateway node (108) according to claim 13, wherein the data resume indication is received (313a, 505, 710, 1208, 1406) from the RAN node (103) in connection with receiving data (309, 507, 712) for the UE (101) from the RAN node (103).
or
wherein the data resume indication is received (313b, 607, 1212, 1406) from the mobility management node (105) before transmitting data (309, 507, 712) for the UE (101) to the RAN node (103).

15. The gateway node (108) according to any one of claims 10-14, wherein the gateway node (108) comprises information indicating that the UE (101) is in idle state after the at least one RAN-CN data connection (109) has been suspended; and
wherein the gateway node (108) comprises information indicating that the UE (101) is in connected state after the at least one RAN-CN data connection (109) has been resumed.

16. The gateway node (108) according to any one of claims 10-15, wherein the stored resume information comprises a Fully-Qualified Tunnel Endpoint Identifier, F-TEID associated with the RAN node (103).

17. The gateway node (108) according to any one of claims 10-16, wherein at least one RAN-CN signaling connection (111) between the RAN node (103) and the mobility management node (105) is maintained when the at least RAN-CN data connection (109) between the RAN node (103) and the gateway node (105) is suspended.

18. The gateway node (108) according to any one of claims 10-17, wherein the gateway node (108) is a Serving GateWay, SGW, or a combined SGW and Packet data network Gateway, SGW/PGW.

## Patentansprüche

1. Verfahren in einem Gateway-Knoten (108) zum Handhaben einer Funkzugangsnetzwerk-Kernnetzwerk-, RAN-CN, Datenverbindung (109) zwischen dem Gateway-Knoten (108) und einem Funkzugangsnetzwerk-, RAN, Knoten (103) in einem Kommunikationssystem (100),
das Verfahren umfassend:
*Empfangen* (306, 405, 1005, 1010, 1403) von dem RAN-Knoten (103), der eine Benutzerausrüstung, UE, (101) bedient, einer Datensperrangabe, die angibt, dass mindestens eine RAN-CN-Datenverbindung (109) für die UE (101) gesperrt werden sollte;
wenn die Datensperrangabe empfangen wurde, *Speichern* (307, 1404) von Wiederaufnahmeinformationen, die mit dem RAN-Knoten (103) verknüpft sind, um Wiederaufnahme der mindestens einen RAN-CN-Datenverbindung (109) zu ermöglichen;
*Sperren* (308, 1405) der mindestens einen RAN-CN-Datenverbindung (109) gemäß der empfangenen Datensperrangabe;
*Empfangen* (313a, 313b, 505, 607, 710, 1208, 1212, 1406) einer Datenwiederaufnahmeangabe, die angibt, dass die mindestens eine RAN-CN-Datenverbindung (109) für die UE (101) wiederaufgenommen werden sollte; und
*Wiederaufnehmen* (314, 1407), in Antwort auf die empfangene Datenwiederaufnahmeangabe, der mindestens einen RAN-CN-Datenverbindung (109) für die UE (101) unter Verwendung der gespeicherten Wiederaufnahmeinformationen,
**dadurch gekennzeichnet, dass** das Verfahren weiter die folgenden Schritte umfasst, die vor den oben angegebenen Schritten durchgeführt werden:
*Empfangen* (301, 313b, 602, 803, 1011, 1103, 1401), von einem Mobilitätsmanagementknoten (105) einer ersten Unterstützungsnachricht, dass der Mobilitätsmanagementknoten (105) eine Handhabung von mindestens einem von Sperre und Wiederaufnahme unterstützt, und
*Senden* (301, 313b, 602, 803, 1011, 1103, 1402) an den Mobilitätsmanagementknoten (105) einer zweiten Unterstützungsnachricht, dass der Gateway-Knoten (108) Handhabung von mindestens einem von Sperre und Wiederaufnahme unterstützt.

2. Verfahren nach Anspruch 1, weiter umfassend:
Empfangen (313b, 607, 1406) der Datenwiederaufnahmeangabe in Antwort auf die zweite Unterstützungsnachricht, die an den Mobilitätsmanagementknoten (105) gesendet wird (301, 602, 1402), und wobei die erste Unterstützungsnachricht in der Datenwiederaufnahmeangabe beinhaltet ist.

3. Verfahren nach Anspruch 2, wobei die mindestens eine RAN-CN-Datenverbindung (109) wiederaufgenommen wird (314, 1407), wenn die Datenwiederaufnahmeangabe von dem Gateway-Knoten (108) empfangen wird, bevor ein Zeitgeber, der mit der gesendeten zweiten Unterstützungsnachricht verknüpft ist, abläuft.

4. Verfahren nach einem der Ansprüche 1-3, wobei die Datenwiederaufnahmeangabe von dem RAN-Knoten (103) empfangen wird (313a, 505, 710, 1208, 1406) oder von einem Mobilitätsmanagementknoten (105) empfangen wird (313b, 607, 1212, 1406).

5. Verfahren nach Anspruch 4, wobei die Datenwiederaufnahmeangabe von dem RAN-Knoten (103) in Verbindung mit Empfang von Daten (309, 507, 712) für die UE (101) von dem RAN-Knoten (103) empfangen wird (313a, 505, 710, 1208, 1406), oder
wobei die Datenwiederaufnahmeangabe von dem Mobilitätsmanagementknoten (105) empfangen wird (313b, 607, 1212, 1406), bevor Daten (309, 507, 712) für die UE (101) an den RAN-Knoten (103) gesendet werden.

6. Verfahren nach einem der Ansprüche 1-5, wobei der Gateway-Knoten (108) Informationen umfasst, die angeben, dass die UE (101) im Ruhezustand ist, nachdem die mindestens eine RAN-CN-Datenverbindung (109) gesperrt wurde; und
wobei der Gateway-Knoten (108) Informationen umfasst, die angeben, dass die UE (101) im verbundenen Zustand ist, nachdem die mindestens eine RAN-CN-Datenverbindung (109) wiederaufgenommen wurde.

7. Verfahren nach einem der Ansprüche 1-6, wobei die gespeicherten Wiederaufnahmeinformationen eine vollständig qualifizierte Tunnelendpunktkennung (Fully-Qualified Tunnel Endpoint Identifier), F-TEID, umfassen, die mit dem RAN-Knoten (103) verknüpft ist.

8. Verfahren nach einem der Ansprüche 1-7, wobei mindestens eine RAN-CN-Signalleitungsverbindung (111) zwischen dem RAN-Knoten (103) und dem Mobilitätsmanagementknoten (105) aufrechterhalten wird, wenn die mindestens eine RAN-CN-Datenverbindung (109) zwischen dem RAN-Knoten (103) und dem Gateway-Knoten (105) gesperrt ist.

9. Verfahren nach einem der Ansprüche 1-8, wobei der Gateway-Knoten (108) ein Serving GateWay, SGW, oder ein kombiniertes SGW und Paketdatennetzwerk-Gateway, SGW/PGW, ist.

10. Gateway-Knoten (108) zum Handhaben einer Funkzugangsnetzwerk-Kernnetzwerk-, RAN-CN, Datenverbindung (109) zwischen dem Gateway-Knoten (108) und einem Funkzugangsnetzwerk-, RAN, Knoten (103) in einem Kommunikationssystem (100),
wobei der Gateway-Knoten (108) konfiguriert ist zum:
Empfangen von dem RAN-Knoten (103), der eine Benutzerausrüstung, UE, (101) bedient, einer Datensperrangabe, die angibt, dass mindestens eine RAN-CN-Datenverbindung (109) für die UE (101) gesperrt werden sollte;
wenn die Datensperrangabe empfangen wurde, Speichern von Wiederaufnahmeinformationen, die mit dem RAN-Knoten (103) verknüpft sind, um Wiederaufnahme der mindestens einen RAN-CN-Datenverbindung (109) zu ermöglichen;
Sperren der mindestens einen RAN-CN-Datenverbindung (109) gemäß der empfangenen Datensperrangabe;
Empfangen einer Datenwiederaufnahmeangabe, die angibt, dass die mindestens eine RAN-CN-Datenverbindung (109) für die UE (101) wiederaufgenommen werden sollte; und zum
Wiederaufnehmen, in Antwort auf die empfangene Datenwiederaufnahmeangabe, der mindestens einen RAN-CN-Datenverbindung (109) für die UE (101) unter Verwendung der gespeicherten Wiederaufnahmeinformationen,
**dadurch gekennzeichnet, dass** der Gateway-Knoten (108) weiter konfiguriert ist zum:
Empfangen von einem Mobilitätsmanagementknoten (105) einer ersten Unterstützungsnachricht, dass der Mobilitätsmanagementknoten (105) eine Handhabung von mindestens einem von Sperre und Wiederaufnahme unterstützt, und zum
Senden an den Mobilitätsmanagementknoten (105) einer zweiten Unterstützungsnachricht, dass der Gateway-Knoten (108) Handhabung von mindestens einem von Sperre und Wiederaufnahme unterstützt,
vor den oben angegebenen Aktionen.

11. Gateway-Knoten (108) nach Anspruch 10, der weiter konfiguriert ist zum:
Empfangen der Datenwiederaufnahmeangabe in Antwort auf die zweite Unterstützungsnachricht, die an den Mobilitätsmanagementknoten (105) gesendet wird (301, 602, 1402), und wobei die erste Unterstützungsnachricht in der Datenwiederaufnahmeangabe beinhaltet ist.

12. Gateway-Knoten (108) nach einem der Ansprüche 10-11, wobei die mindestens eine RAN-CN-Datenverbindung (109) wiederaufgenommen wird (314, 1407), wenn die Datenwiederaufnahmeangabe von dem Gateway-Knoten (108) empfangen wird, bevor ein Zeitgeber, der mit der gesendeten zweiten Unterstützungsnachricht verknüpft ist, abläuft.

13. Gateway-Knoten (108) nach einem der Ansprüche 10-12, wobei die Datenwiederaufnahmeangabe von dem RAN-Knoten (103) empfangen wird (313a, 505, 710, 1208, 1406) oder von einem Mobilitätsmanagementknoten (105) empfangen wird (313b, 607, 1212, 1406).

14. Gateway-Knoten (108) nach Anspruch 13, wobei die Datenwiederaufnahmeangabe von dem RAN-Knoten (103) in Verbindung mit Empfang von Daten (309, 507, 712) für die UE (101) von dem RAN-Knoten (103) empfangen wird (313a, 505, 710, 1208, 1406), oder
wobei die Datenwiederaufnahmeangabe von dem Mobilitätsmanagementknoten (105) empfangen wird (313b, 607, 1212, 1406), bevor Daten (309, 507, 712) für die UE (101) an den RAN-Knoten (103) gesendet werden.

15. Gateway-Knoten (108) nach einem der Ansprüche 10-14, wobei der Gateway-Knoten (108) Informationen umfasst, die angeben, dass die UE (101) im Ruhezustand ist, nachdem die mindestens eine RAN-CN-Datenverbindung (109) gesperrt wurde; und
wobei der Gateway-Knoten (108) Informationen umfasst, die angeben, dass die UE (101) im verbundenen Zustand ist, nachdem die mindestens eine RAN-CN-Datenverbindung (109) wiederaufgenommen wurde.

16. Gateway-Knoten (108) nach einem der Ansprüche 10-15, wobei die gespeicherten Wiederaufnahmeinformationen eine vollständig qualifizierte Tunnelendpunktkennung (Fully-Qualified Tunnel Endpoint Identifier), F-TEID, umfassen, die mit dem RAN-Knoten (103) verknüpft ist.

17. Gateway-Knoten (108) nach einem der Ansprüche 10-16, wobei mindestens eine RAN-CN-Signalleitungsverbindung (111) zwischen dem RAN-Knoten (103) und dem Mobilitätsmanagementknoten (105) aufrechterhalten wird, wenn die mindestens eine RAN-CN-Datenverbindung (109) zwischen dem RAN-Knoten (103) und dem Gateway-Knoten (108) gesperrt ist.

18. Gateway-Knoten (108) nach einem der Ansprüche 10-17, wobei der Gateway-Knoten (108) ein Serving GateWay, SGW, oder ein kombiniertes SGW und Paketdatennetzwerk-Gateway, SGW/PGW, ist.

## Revendications

1. Procédé dans un nœud de passerelle (108) pour gérer une connexion de données de réseau d'accès radio-réseau central, RAN-CN, (109) entre le nœud de passerelle (108) et un nœud de réseau d'accès radio, RAN, (103) dans un système de communication (100), le procédé comprenant :
la *réception* (306, 405, 1005, 1010, 1403), à partir du nœud RAN (103) desservant un équipement utilisateur, UE, (101), d'une indication de suspension de données indiquant qu'au moins une connexion de données RAN-CN (109) pour l'UE (101) devrait être suspendue ;
quand l'indication de suspension de données a été reçue, le *stockage* (307, 1404) d'informations de reprise associées au nœud RAN (103) pour permettre la reprise de l'au moins une connexion de données RAN-CN (109) ;
la *suspension* (308, 1405) de l'au moins une connexion de données RAN-CN (109) en fonction de l'indication de suspension de données reçue ;
la *réception* (313a, 313b, 505, 607, 710, 1208, 1212, 1406) d'une indication de reprise de données indiquant que l'au moins une connexion de données RAN-CN (109) pour l'UE (101) devrait être reprise ; et
la *reprise* (314, 1407), en réponse à l'indication de reprise de données reçue, de l'au moins une connexion de données RAN-CN (109) pour l'UE (101) en utilisant les informations de reprise stockées,
**caractérisé en ce que** le procédé comprend en outre les étapes suivantes qui sont effectuées avant les étapes ci-dessus :
la *réception* (301, 313b, 602, 803, 1011, 1103, 1401), à partir d'un nœud de gestion de mobilité (105), d'une première notification de prise en charge du fait que le nœud de gestion de mobilité (105) prend en charge la gestion d'au moins une parmi la suspension et la reprise, et
l'*envoi* (301, 313b, 602, 803, 1011, 1103, 1402), au nœud de gestion de mobilité (105), d'une seconde notification de prise en charge du fait que le nœud de passerelle (108) prend en charge la gestion d'au moins une parmi la suspension et la reprise.

2. Procédé selon la revendication 1, comprenant en outre :
la réception (313b, 607, 1406) de l'indication de reprise de données en réponse à la seconde notification de prise en charge envoyée (301, 602, 1402) au nœud de gestion de mobilité (105), et dans lequel la première notification de prise en charge est comprise dans l'indication de reprise de données.

3. Procédé selon la revendication 2, dans lequel l'au moins une connexion de données RAN-CN (109) est reprise (314, 1407) quand l'indication de reprise de données est reçue par le nœud de passerelle (108) avant qu'un temporisateur associé à la seconde notification de prise en charge envoyée n'expire.

4. Procédé selon l'une quelconque des revendications 1 à 3, dans lequel l'indication de reprise de données est reçue (313a, 505, 710, 1208, 1406) à partir du nœud RAN (103) ou reçue (313b, 607, 1212, 1406) à partir d'un nœud de gestion de mobilité (105).

5. Procédé selon la revendication 4, dans lequel l'indication de reprise de données est reçue (313a, 505, 710, 1208, 1406) à partir du nœud RAN (103) en relation avec la réception de données (309, 507, 712) pour l'UE (101) à partir du nœud RAN (103),
ou
dans lequel l'indication de reprise de données est reçue (313b, 607, 1212, 1406) à partir du nœud de gestion de mobilité (105) avant la transmission de données (309, 507, 712) pour l'UE (101) au nœud RAN (103).

6. Procédé selon l'une quelconque des revendications 1 à 5, dans lequel le nœud de passerelle (108) comprend des informations indiquant que l'UE (101) est dans un état inactif après que l'au moins une connexion de données RAN-CN (109) a été suspendue ; et
dans lequel le nœud de passerelle (108) comprend des informations indiquant que l'UE (101) est dans un état connecté après que l'au moins une connexion de données RAN-CN (109) a été reprise.

7. Procédé selon l'une quelconque des revendications 1 à 6, dans lequel les informations de reprise stockées comprennent un identificateur de point de terminaison de tunnel pleinement qualifié, F-TEID, associé au nœud RAN (103).

8. Procédé selon l'une quelconque des revendications 1 à 7, dans lequel au moins une connexion de signalisation RAN-CN (111) entre le nœud RAN (103) et le nœud de gestion de mobilité (105) est maintenue quand l'au moins une connexion de données RAN-CN (109) entre le nœud RAN (103) et le nœud de passerelle (105) est suspendue.

9. Procédé selon l'une quelconque des revendications 1 à 8, dans lequel le nœud de passerelle (108) est une passerelle de desserte, SGW, ou une SGW et une passerelle de réseau de données par paquets combinées, SGW/PGW.

10. Nœud de passerelle (108) pour gérer une connexion de données de réseau d'accès radio-réseau central, RAN-CN, (109) entre le nœud de passerelle (108) et un nœud de réseau d'accès radio, RAN, (103) dans un système de communication (100), le nœud de passerelle (108) étant configuré pour
recevoir, à partir du nœud RAN (103) desservant un équipement utilisateur, UE, (101), une indication de suspension de données indiquant qu'au moins une connexion de données RAN-CN (109) pour l'UE (101) devrait être suspendue ;
quand l'indication de suspension de données a été reçue, stocker des informations de reprise associées au nœud RAN (103) pour permettre la reprise de l'au moins une connexion de données RAN-CN (109) ;
suspendre l'au moins une connexion de données RAN-CN (109) en fonction de l'indication de suspension de données reçue ;
recevoir une indication de reprise de données indiquant que l'au moins une connexion de données RAN-CN (109) pour l'UE (101) devrait être reprise ; et pour
reprendre, en réponse à l'indication de reprise de données reçue, l'au moins une connexion de données RAN-CN (109) pour l'UE (101) en utilisant les informations de reprise stockées,
**caractérisé en ce que** le nœud de passerelle (108) est configuré en outre pour :
recevoir, à partir d'un nœud de gestion de mobilité (105), une première notification de prise en charge du fait que le nœud de gestion de mobilité (105) prend en charge la gestion d'au moins une parmi la suspension et la reprise, et pour
envoyer, au nœud de gestion de mobilité (105), une seconde notification de prise en charge du fait que le nœud de passerelle (108) prend en charge la gestion d'au moins une parmi la suspension et la reprise, avant les actions ci-dessus.

11. Nœud de passerelle (108) selon la revendication 10, configuré en outre pour :
recevoir l'indication de reprise de données en réponse à la seconde notification de prise en charge envoyée (301, 602, 1402) au nœud de gestion de mobilité (105), et dans lequel la première notification de prise en charge est comprise dans l'indication de reprise de données.

12. Nœud de passerelle (108) selon l'une quelconque des revendications 10 à 11, dans lequel l'au moins une connexion de données RAN-CN (109) est reprise (314, 1407) quand l'indication de reprise de données est reçue par le nœud de passerelle (108) avant qu'un temporisateur associé à la seconde notification de prise en charge envoyée n'expire.

13. Nœud de passerelle (108) selon l'une quelconque des revendications 10 à 12, dans lequel l'indication de reprise de données est reçue (313a, 505, 710, 1208, 1406) à partir du nœud RAN (103) ou reçue (313b, 607, 1212, 1406) à partir d'un nœud de gestion de mobilité (105).

14. Nœud de passerelle (108) selon la revendication 13, dans lequel l'indication de reprise de données est reçue (313a, 505, 710, 1208, 1406) à partir du nœud RAN (103) en relation avec la réception de données (309, 507, 712) pour l'UE (101) à partir du nœud RAN (103),
ou
dans lequel l'indication de reprise de données est reçue (313b, 607, 1212, 1406) à partir du nœud de gestion de mobilité (105) avant la transmission de données (309, 507, 712) pour l'UE (101) au nœud RAN (103).

15. Nœud de passerelle (108) selon l'une quelconque des revendications 10 à 14, dans lequel le nœud de passerelle (108) comprend des informations indiquant que l'UE (101) est dans un état inactif après que l'au moins une connexion de données RAN-CN (109) a été suspendue ; et
dans lequel le nœud de passerelle (108) comprend des informations indiquant que l'UE (101) est dans un état connecté après que l'au moins une connexion de données RAN-CN (109) a été reprise.

16. Nœud de passerelle (108) selon l'une quelconque des revendications 10 à 15, dans lequel les informations de reprise stockées comprennent un identificateur de point de terminaison de tunnel pleinement qualifié, F-TEID, associé au nœud RAN (103).

17. Nœud de passerelle (108) selon l'une quelconque des revendications 10 à 16, dans lequel au moins une connexion de signalisation RAN-CN (111) entre le nœud RAN (103) et le nœud de gestion de mobilité (105) est maintenue quand l'au moins une connexion de données RAN-CN (109) entre le nœud RAN (103) et le nœud de passerelle (105) est suspendue.

18. Nœud de passerelle (108) selon l'une quelconque des revendications 10 à 17, dans lequel le nœud de passerelle (108) est une passerelle de desserte, SGW, ou une SGW et une passerelle de réseau de données par paquets combinées, SGW/PGW.
